# EUROPEAN PATENT APPLICATION

(11) **EP 4 520 651 A1**
(43) Date of publication of application: **12.03.2025**
(21) Application number: 24188621.7
(22) Date of filing: 15.07.2024
(51) Int. Cl.: B63H 21/20

(54) **SHIP**

(30) Priority: 31.07.2023 JP 2023124508
(71) Applicant: Yanmar Holdings Co., Ltd., Osaka-shi, Osaka (JP)
(72) Inventor: TAMURA, Gakuji, Oita (JP); OHASHI, Ryosuke, Oita (JP); KOBAYASHI, Yoshiyuki, Osaka (JP); FUJIMORI, Tatsuya, Osaka (JP); SAWADA, Jumpei, osaka (JP); HONJO, Toru, Osaka (JP)
(74) Representative: Novagraaf International SA

(57) **Abstract**

[Problem] To provide a technique capable of improving convenience in a ship including a hybrid system.

[Solution] An exemplary ship includes a plurality of hybrid systems that drives a propelling machine, and a control device that controls the plurality of hybrid systems. The control device sets the plurality of hybrid systems to the same operation mode.

## Description

### TECHNICAL FIELD

The present invention relates to a ship.

### BACKGROUND ART

Conventionally, there has been known a ship hybrid system including a motor in addition to an engine as a power source of the ship. Patent Document 1 discloses a technique that enables an occupant to easily grasp an operation status of a hybrid system in a ship including the hybrid system.

In Patent Document 1, a display device also has a function as an operation device. In the display device, a mode switching button for performing an operation of switching a plurality of operation modes set in the hybrid system is arranged around a screen area.

### PRIOR ART DOCUMENT

### PATENT DOCUMENT

Patent Document 1: JP-A-2022-85672

### SUMMARY OF INVENTION

### TECHNICAL PROBLEM

In the configuration of Patent Document 1, when there are a plurality of hybrid systems that drives a propelling machine, it is not possible to control the plurality of hybrid systems or grasp operation statuses of the plurality of hybrid systems. Further, in Patent Document 1, the switching of the operation mode can be executed by a single button operation. Such a configuration has an advantage that operation is easy for the occupant of the ship. However, when the switching of the operation mode can be easily executed by the single button operation, there is a possibility that mode transition due to erroneous operation occurs easily, and there is a possibility that the convenience of the occupant is deteriorated. In particular, on a ship which easily sways, the possibility of occurrence of erroneous operation increases, and for this reason, the above-described concern increases.

In view of the above-described points, the present invention is intended to provide a technique capable of improving convenience in a ship including a hybrid system.

### SOLUTION TO PROBLEM

An exemplary ship of the present invention includes a plurality of hybrid systems that drives a propelling machine, and
a control device that controls the plurality of hybrid systems. The control device sets the plurality of hybrid systems to the same operation mode.

### ADVANTAGEOUS EFFECTS OF INVENTION

According to the example of the present invention, the convenience in the ship including the hybrid system can be improved.

### BRIEF DESCRIPTION OF DRAWINGS

Fig. 1 is a diagram showing the outline of a hybrid system in a ship;
Fig. 2 is a diagram showing, as an example, a state in which a control mode transitions to ship steering control with a hybrid function;
Fig. 3 is a diagram showing a control operation example when an ENG mode is selected in the ship steering control with the hybrid function;
Fig. 4 is a diagram showing a control operation example when an EV mode is selected in the ship steering control with the hybrid function;
Fig. 5 is a diagram showing a control operation example when an HYB mode is selected in the ship steering control with the hybrid function;
Fig. 6 is a diagram showing, as an example, a state in which the control mode transitions to ship steering control without the hybrid function;
Fig. 7 is a diagram showing a control operation example in the ship steering control without the hybrid function;
Fig. 8 is a diagram showing the configuration of a ship;
Fig. 9 is a schematic view showing the configuration of a main screen for collectively displaying an operation status;
Fig. 10A is a view showing a screen change in an operation of switching an operation mode;
Fig. 10B is a view showing the screen change in the operation of switching the operation mode;
Fig. 10C is a view showing the screen change in the operation of switching the operation mode;
Fig. 10D is a view showing the screen change in the operation of switching the operation mode;
Fig. 11 is a view showing a screen example when the operation mode has transitioned to the HYB mode by operation of a mode status display button on the screen shown in Fig. 10D;
Fig. 12 is a view showing a screen example when the operation modes include an unswitchable mode;
Fig. 13 is a view showing a screen example when the mode status display button has been operated in a display device in which operation of the mode status display button is not enabled;
Fig. 14 is a view for describing a switch for an external charging mode in the ship;
Fig. 15 is a view showing a screen example of the main screen when the switch for the external charging mode is in an ON state;
Fig. 16A is a view showing a screen example when an abnormal state or a warning state has occurred in the hybrid system;
Fig. 16B is a view showing a screen example when a pop-up message in Fig. 16A is hidden;
Fig. 17 is a flowchart showing, as an example, the flow of control of the transition of the operation mode;
Fig. 18 is a flowchart showing, as an example, the flow of control related to a battery;
Fig. 19 is a flowchart showing, as an example, the flow of processing related to functional restriction on the ship steering control;
Fig. 20 is a flowchart showing, as an example, the flow of recovery control after stop due to an abnormality;
Fig. 21 is a diagram showing fail safe operation when an abnormality has occurred in some of components of a motor generator control system during navigation in the HYB mode;
Fig. 22 is a diagram showing ship steering continuous operation after the fail safe operation shown in Fig. 21;
Fig. 23 is a diagram showing the fail safe operation when an abnormality has occurred in some of components of an engine control system during navigation in the HYB mode;
Fig. 24 is a diagram showing the ship steering continuous operation after the fail safe operation shown in Fig. 23;
Fig. 25 is a diagram showing the fail safe operation when a communication abnormality has occurred in a second control device during navigation in the HYB mode;
Fig. 26 is a diagram showing the fail safe operation when a communication abnormality has occurred in a first control device during navigation in the HYB mode;
Fig. 27 is a diagram showing the ship steering continuous operation after the fail safe operation shown in Fig. 26;
Fig. 28 is a diagram showing the fail safe operation when an abnormality has occurred in the second control device during navigation in the HYB mode; and
Fig. 29 is a diagram showing the fail safe operation when an abnormality has occurred in the first control device during navigation in the HYB mode.

### DESCRIPTION OF EMBODIMENTS

Hereinafter, an exemplary embodiment of the present invention will be described in detail with reference to the drawings. Note that in the figures, the same or equivalent elements are denoted by the same reference numerals and description thereof will not be repeated unless otherwise required.

### <1. Outline of hybrid system>

### [1-1. Outline of configuration]

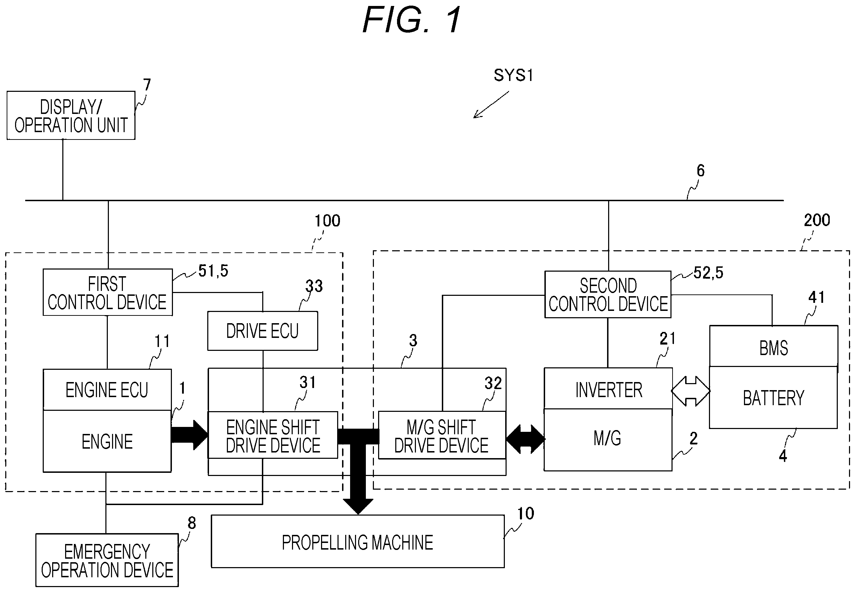

Fig. 1 is a diagram showing the outline of a hybrid system SYS1 in a ship according to the embodiment of the present invention. Note that in Fig. 1, a thin solid line indicates a signal line, a thick black arrow indicates a power flow, and a white arrow indicates a power flow.

The hybrid system SYS1 drives a propelling machine 10 that propels the ship. The hybrid system SYS1 is a hybrid propelling device. The propelling machine 10 is, for example, a screw or a propeller. As shown in Fig. 1, the hybrid system SYS 1 includes an engine 1, a motor generator (M/G) 2, a power transmission device 3, and a battery 4. The hybrid system SYS1 is provided to enable engine navigation and motor navigation of the ship and charging of the battery 4.

The engine 1 is a diesel engine, but may be another engine such as a gasoline engine or a hydrogen fuel engine. The engine 1 is driven under the control of an engine electronic control unit (ECU) 11 included in the hybrid system SYS 1. The engine ECU 11 performs electronic control for timely injecting an optimal amount of fuel to the engine.

The motor generator 2 acts as a motor when power is supplied from the battery 4 via an inverter 21, and generates drive force for driving the propelling machine 10. Specifically, DC power output from the battery 4 is converted into AC power by the inverter 21 and supplied to the motor generator 2. The motor generator 2 acts as a power generator when power is transmitted from the engine 1 via the power transmission device 3, and outputs AC power. Specifically, AC power output from the motor generator 2 is converted into DC power by the inverter 21 and supplied to the battery 4. That is, the battery 4 is charged.

The power transmission device 3 includes an engine shift drive device 31 and a motor generator shift drive device 32. The engine shift drive device 31 includes a shift hydraulic valve, and is driven under the control of a drive ECU 33. The engine shift drive device 31 switches transmission and blocking of the drive force from the engine 1, and switches a rotation direction in power transmission (rotation direction of the propelling machine 10).

The motor generator shift drive device 32 includes a shift actuator and a shift valve, and is driven under the control of a second control device 52. When the motor generator 2 acts as the motor, the motor generator shift drive device 32 switches transmission and blocking of the power from the motor generator 2 and the rotation direction in power transmission (rotation direction of the propelling machine 10). When the motor generator 2 acts as the power generator, the motor generator shift drive device 32 transmits or blocks the power from the engine 1.

The battery 4 includes, for example, a lithium ion battery, and is a chargeable/dischargeable secondary battery. Charging and discharging of the battery 4 is monitored and controlled by a battery management system (BMS) 41 provided as a control circuit. The battery 4 is switchable between a state of being connected to the inverter 21 and a state of not being connected to the inverter 21.

As shown in Fig. 1, the hybrid system SYS1 includes a control device 5. The control device 5 is a computer device, and an arithmetic circuit executes arithmetic processing according to a computer program to implement the function thereof. Specifically, the control device 5 includes a first control device 51 and the second control device 52 communicable with each other. The first control device 51 and the second control device 52 are specifically ECUs. The first control device 51 and the second control device 52 are connected via a communication bus 6 such as a controller area network (CAN) bus.

The first control device 51 is communicably connected to the engine ECU 11 and the drive ECU 33, and controls these components. The first control device 51 and these ECUs 11, 33 together form an engine control system 100. Note that the first control device 51 may include the engine ECU 11 and the drive ECU 33. The first control device 51 is provided to control navigation using the engine 1.

The second control device 52 is communicably connected to the inverter 21, the motor generator shift drive device 32, and the BMS 41, and controls these components. The second control device 52 forms a motor generator control system 200. Note that the second control device 52 is provided to be able to control the engine 1 via the first control device 51. That is, the second control device 52 is provided to be able to control navigation using the hybrid system SYS1.

As can be seen from the above-described contents, the ship including the hybrid system SYS1 can perform ship steering control with a hybrid function using the hybrid system SYS1 and ship steering control without the hybrid function using only the engine 1.

Further, the hybrid system SYS1 includes a display/operation unit 7 connected to the communication bus 6, etc. The display/operation unit 7 includes a device for displaying, e.g., information necessary for steering the ship to an occupant (user) of the ship or for the occupant to make a command related to ship steering. Further, the ship including the hybrid system SYS1 includes an emergency operation device 8 that operates the engine 1 and the engine shift drive device 31 in an emergency in which the control device 5 cannot be used. The emergency operation device 8 includes a backup display unit in addition to an operation unit. Provided with the emergency operation device 8, it is possible to prevent the ship from drifting even when failure such as breakdown of the control device 5 occurs.

### [1-2. Outline of control by control device]

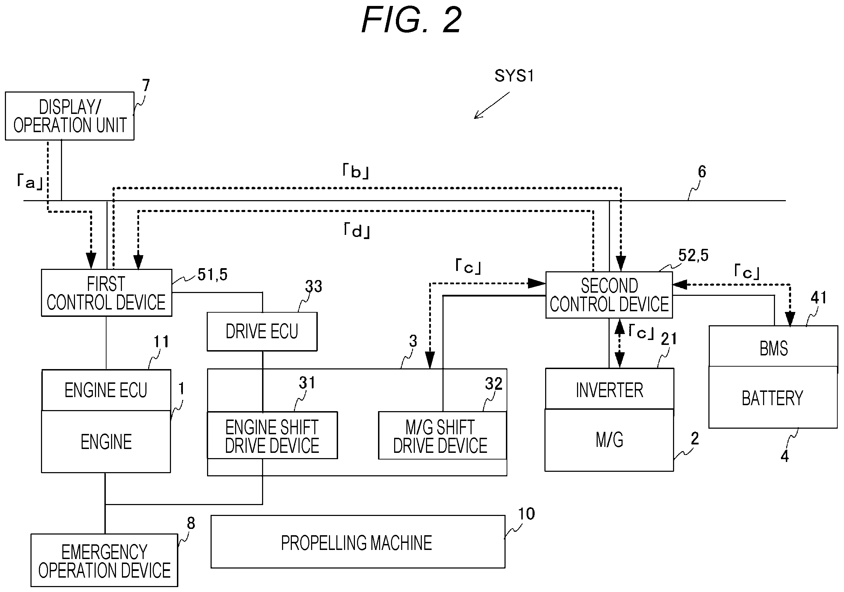

Next, the outline of control by the control device 5 will be described with reference to Figs. 2 to 7. In Figs. 2 to 7, a broken arrow indicates that control processing is executed, and an alphabet in the vicinity of the broken arrow indicates the order of execution of the control processing. The control processing is performed in alphabetical order. As in Fig. 1, in Figs. 2 to 7, a thin solid line indicates a signal line, a thick black arrow indicates a power flow, and a white arrow indicates a power flow.

Fig. 2 is a diagram showing, as an example, a state in which a control mode transitions to the ship steering control with the hybrid function. In the ship of the present embodiment, when a power source for activating the hybrid system SYS1 is turned on, the processing of transitioning to the ship steering control with the hybrid function as shown in Fig. 2 is normally started.

As shown in Fig. 2, first, the display/operation unit 7 instructs the first control device 51 to transition to the ship steering control with the hybrid function (processing order "a"). Accordingly, the first control device 51 requests the second control device 52 via the communication bus 6 to transition to the ship steering control with the hybrid function (processing order "b"). The second control device 52 having received the transition request checks the statuses of the units 21, 32, 41 to which the second control device 52 itself is connected (processing order "c"). Such status check includes, e.g., checking whether or not initialization has been completed. If there is no problem as a result of the status check, the second control device 52 makes a transition completion response to the first control device 51 (processing order "d"). This completes the transition to the ship steering control with the hybrid function. Note that when there is a problem in the status check, an error is appropriately displayed.

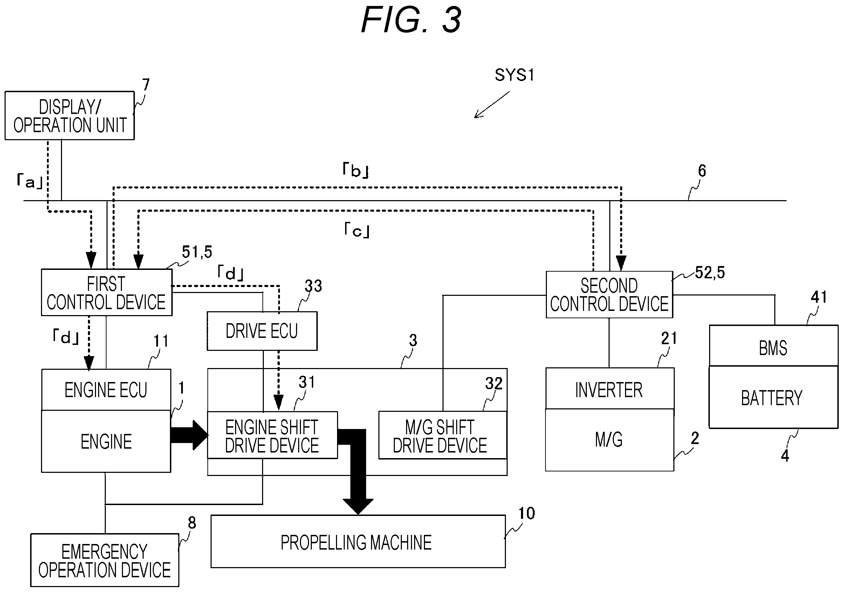

Fig. 3 is a diagram showing a control operation example when an ENG mode is selected in the ship steering control with the hybrid function. Note that the ENG mode is an operation mode in which the ship is navigated using the engine 1. Moreover, in Fig. 3, the transition to the ENG mode has been completed.

As shown in Fig. 3, the display/operation unit 7 first transmits ship steering information to the first control device 51 (processing order "a"). The first control device 51 notifies the second control device 52 of the acquired ship steering information (processing order "b"). The second control device 52 obtains an engine control target value according to the acquired ship steering information, and notifies the first control device 51 of the target value (processing order "c"). The first control device 51 performs engine control and engine-side shift valve control based on the control value (target value) received from the second control device 52 (processing order "d"). Accordingly, the propelling machine 10 can be driven using the power of the engine 1 to perform the engine navigation.

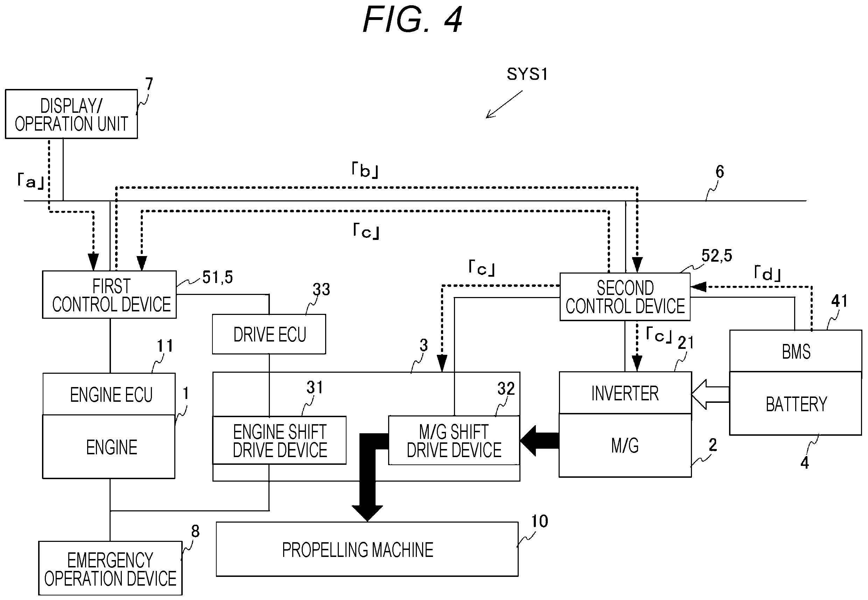

Fig. 4 is a diagram showing a control operation example when an EV mode is selected in the ship steering control with the hybrid function. Note that the EV mode is an operation mode in which the motor generator 2 is operated as the motor to navigate the ship. Moreover, in Fig. 4, the transition to the EV mode has been completed.

As shown in Fig. 4, the display/operation unit 7 first transmits the ship steering information to the first control device 51 (processing order "a"). The first control device 51 notifies the second control device 52 of the acquired ship steering information (processing order "b"). The second control device 52 performs motor control and motor-side shift valve control based on the acquired ship steering information, and notifies the first control device 51 of the engine control target value (no rotation) (processing order "c"). When the motor control is started, battery status monitoring information is periodically transmitted from the BMS 41 to the second control device 52 (processing order "d"). In the above-described manner, the propelling machine 10 can be driven using the motor generator 2 as the motor to perform the motor navigation.

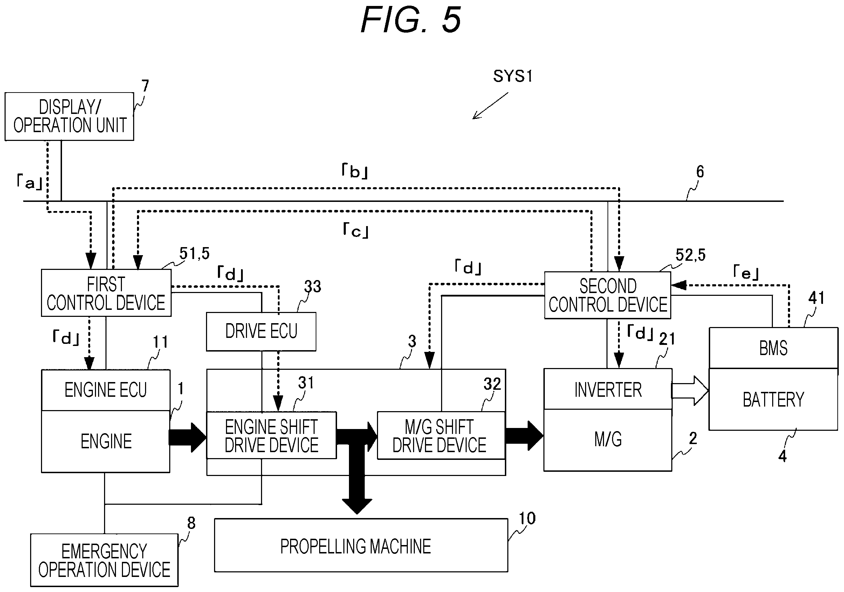

Fig. 5 is a diagram showing a control operation example when an HYB mode is selected in the ship steering control with the hybrid function. Note that the HYB mode is an operation mode in which the motor generator 2 is driven as the power generator by the power of the engine 1 to charge the battery 4 while the ship is being navigated using the engine 1. Moreover, in Fig. 5, the transition to the HYB mode has been completed.

As shown in Fig. 5, the display/operation unit 7 first transmits the ship steering information to the first control device 51 (processing order "a"). The first control device 51 notifies the second control device 52 of the acquired ship steering information (processing order "b"). The second control device 52 obtains an engine control target value according to the acquired ship steering information, and notifies the first control device 51 of the target value (processing order "c"). The first control device 51 performs the engine control and the engine-side shift valve control based on the control value (target value) received from the second control device 52, and the second control device 52 controls (e.g., shift valve control) operation related to power generation and charging (processing order "d"). When the charging operation is started, the battery status monitoring information is periodically transmitted from the BMS 41 to the second control device 52 (processing order "e"). In the above-described manner, the engine navigation can be performed using the power of the engine 1 while the battery 4 is being charged.

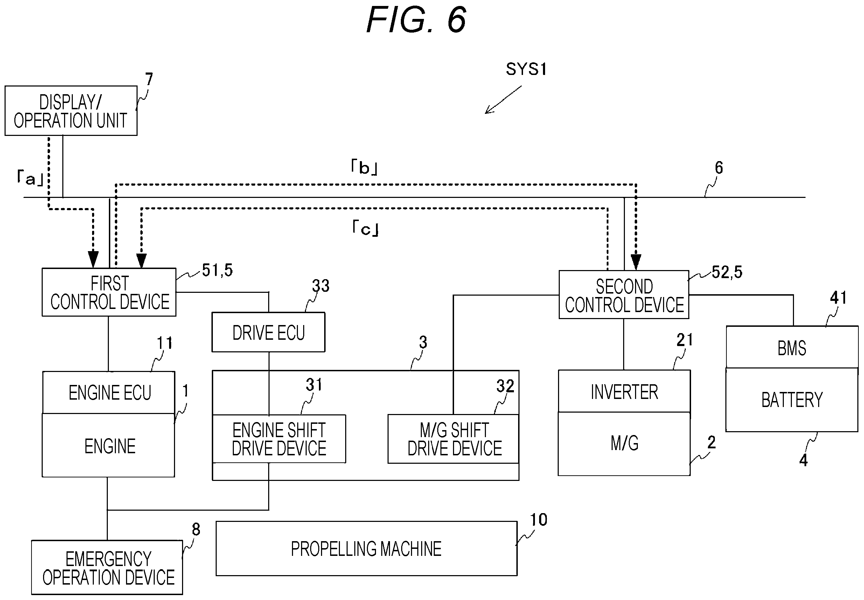

Fig. 6 is a diagram showing, as an example, a state in which the control mode transitions to the ship steering control without the hybrid function. In the ship of the present embodiment, the ship steering control with the hybrid function is normally selected as described above, but can be switched to the ship steering control without the hybrid function. The ship steering control can be switched to the ship steering control without the hybrid function using the display/operation unit 7.

As shown in Fig. 6, first, the display/operation unit 7 instructs the first control device 51 to transition to the ship steering control without the hybrid function (processing order "a"). Accordingly, the first control device 51 requests the second control device 52 via the communication bus 6 to transition to the ship steering control without the hybrid function (processing order "b"). The second control device 52 having received the transition request makes the transition completion response to the first control device 51 (processing order "c"). In the ship steering control with the hybrid function, the second control device 52 functions as a main control device, but in the ship steering control without the hybrid function, the first control device 51 is a main control device.

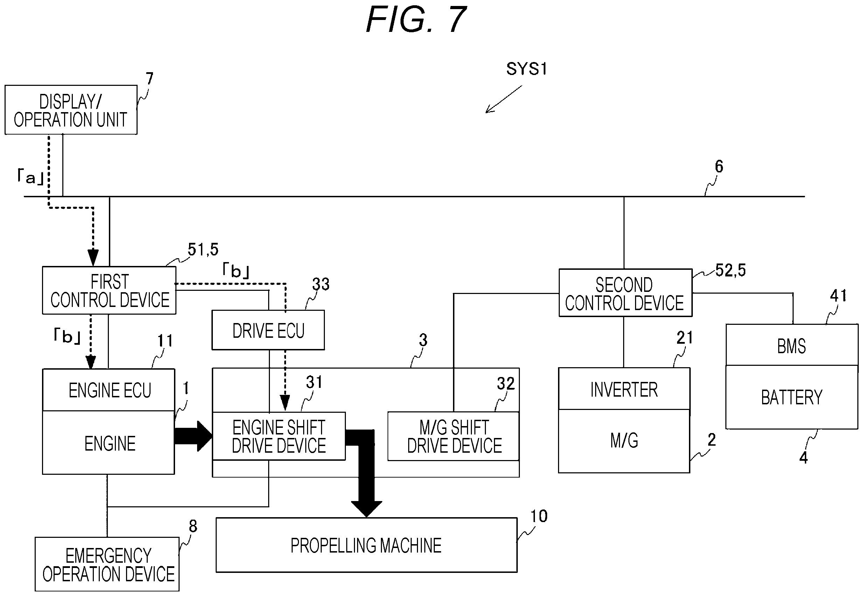

Fig. 7 is a diagram showing a control operation example in the ship steering control without the hybrid function. First, the display/operation unit 7 transmits the ship steering information to the first control device 51 (processing order "a"). The first control device 51 obtains the engine control target value according to the acquired ship steering information, and performs the engine control and the engine-side shift valve control according to the target value (processing order "b"). Accordingly, the propelling machine 10 can be driven using the power of the engine 1 to perform the engine navigation.

### [1-3. Configuration example of ship]

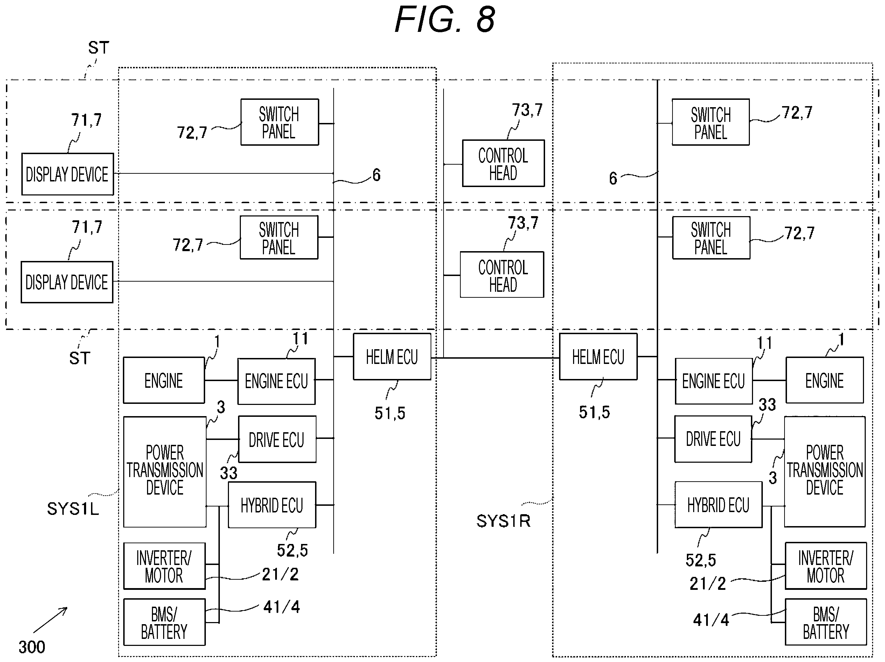

Fig. 8 is a diagram showing the configuration of a ship 300 according to the embodiment of the present invention. As shown in Fig. 8, the ship 300 includes a port-side hybrid system SYS1L and a starboard-side hybrid system SYS1R. That is, the ship 300 includes a plurality of hybrid systems SYS1. The ship 300 includes control devices 5 that control the plurality of hybrid systems SYS1.

Note that in the present embodiment, the number of hybrid systems SYS1 is two, but such a configuration is merely an example and the number of hybrid systems SYS1 may be one or three or more. Although not shown in Fig. 8, the ship 300 includes a port-side propelling machine 10 to be driven by the port-side hybrid system SYS1L and a starboard-side propelling machine 10 to be driven by the starboard-side hybrid system SYS1R.

In Fig. 8, the same components as those of the hybrid system SYS1 shown in Fig. 1 are denoted by the same reference numerals for the components in the port-side and starboard-side hybrid systems SYS1L, SYS1R. For example, a helm ECU 51 in Fig. 8 is the same as the above-described first control device 51. Moreover, a hybrid ECU 52 in Fig. 8 is the same as the above-described second control device 52.

In the example shown in Fig. 8, the battery 4 is provided for each hybrid system SYS1, but may be shared by the plurality of hybrid systems SYS 1. As shown in Fig. 8, when the port-side and starboard-side hybrid systems SYS1L, SYS1R are provided, one battery 4 may be shared by the port-side hybrid system SYS1L and the starboard-side hybrid system SYS1R.

A display device 71, a switch panel 72, and a control head 73 are specific examples of the above-described display/operation unit 7. That is, the ship 300 includes the display device 71, the switch panel 72, and the control head 73.

The display device 71 has a display panel such as a liquid crystal panel or an organic EL panel. The display panel forms a display screen of the display device 71. In the present embodiment, the display panel of the display device 71 has a function as a touch panel. That is, the display device 71 is a display operation device having a function as an operation device. The display device 71 displays an operation status of the hybrid system SYS1. Moreover, the display device 71 is provided to set the operation mode of the hybrid system SYS1. The display device 71 is connected to the communication bus 6, and can communicate with the helm ECU 51 and the hybrid ECU 52. In the present embodiment, since the port-side helm ECU 51 and the starboard-side helm ECU 51 are communicably provided with each other, one display device 71 can be provided for the port side and the starboard side. Details of the display device 71 will be described later.

The switch panel 72 includes, e.g., a power button for the hybrid system SYS 1 and a button for starting and stopping the engine 1 during the ship steering control without the hybrid function. The switch panel 72 is connected to the communication bus 6, and can communicate with the helm ECU 51 and the hybrid ECU 52. In the present embodiment, specifically, the switch panel 72 is provided on each of the port side and the starboard side. That is, the ship 300 includes the port-side switch panel 72 and the starboard-side switch panel 72.

The control head 73 has a throttle function and a shift switching function. The shift switching function is a function of switching forward, neutral, and reverse. In the present embodiment, one control head 73 is provided to steer the ship on the port side and the starboard side. That is, one control head 73 may be provided for the two port-side and starboard-side hybrid systems SYS 1. Note that in the present embodiment, the throttle function and the shift switching function are implemented by moving the position of a ship steering lever. The control head 73 is communicably connected to the helm ECU 51, but is not directly connected to the hybrid ECU 52. Thus, a ship steering command using the control head 73 is transmitted to the hybrid ECU 52 via the helm ECU 51.

As shown in Fig. 8, the ship 300 includes a plurality of stations ST. The station ST is a control cabin (cockpit). Since the plurality of stations ST is provided, the number of display devices 71, the number of switch panels 72, and the number of control heads 73 are increased accordingly. In the present embodiment, since the number of stations ST is two, two display devices 71, two port-side switch panels 72, two starboard-side switch panels 72, and two control heads 73 are provided. Note that the number of stations ST may be one or three or more. According to the number of stations ST, the number of display devices 71, the number of switch panels 72, and the number of control heads 73 may be changed.

In the present embodiment, the control devices 5 set the operation modes of the plurality of hybrid systems SYS1 to the same mode. The operation mode includes, for example, the above-described ENG mode, EV mode, and HYB mode. For example, when the port-side hybrid system SYS1L is in the ENG mode, the control device 5 also sets the starboard-side hybrid system SYS 1R to the ENG mode. When the port-side hybrid system SYS1L is in the EV mode, the control device 5 also sets the starboard-side hybrid system SYS 1R to the EV mode. For example, when the port-side hybrid system SYS1L is in the ENG mode, the starboard-side hybrid system SYS1R is not set to the EV mode.

The helm ECUs (first control devices) 51 included in the hybrid systems SYS 1 can communicate with each other, and these ECUs are adjusted so as to be in the same operation mode. The same operation mode is set among the plurality of hybrid systems SYS1, and therefore, it is possible to eliminate a complexity of individually setting the operation mode for each hybrid system SYS1. Moreover, it is possible to prevent occurrence of dangerous operation due to operation mode inconsistency.

### <2. Display device>

Next, the display device 71 that enables display and operation related to the hybrid system SYS1 will be described in detail.

On the display screen of the display device 71, a screen for displaying the operation status is displayed. In the present embodiment, there are plural types of screens for displaying the operation status. The plural types of screens for displaying the operation status is switchable. The types of screens switchable by the display device 71 include a main screen for collectively displaying the operation status, a data list screen for displaying detailed information on the operation status, a warning list screen for displaying the contents of a warning in progress, and an abnormality list screen for displaying the contents of an abnormality in progress.

### [2-1. Configuration of main screen]

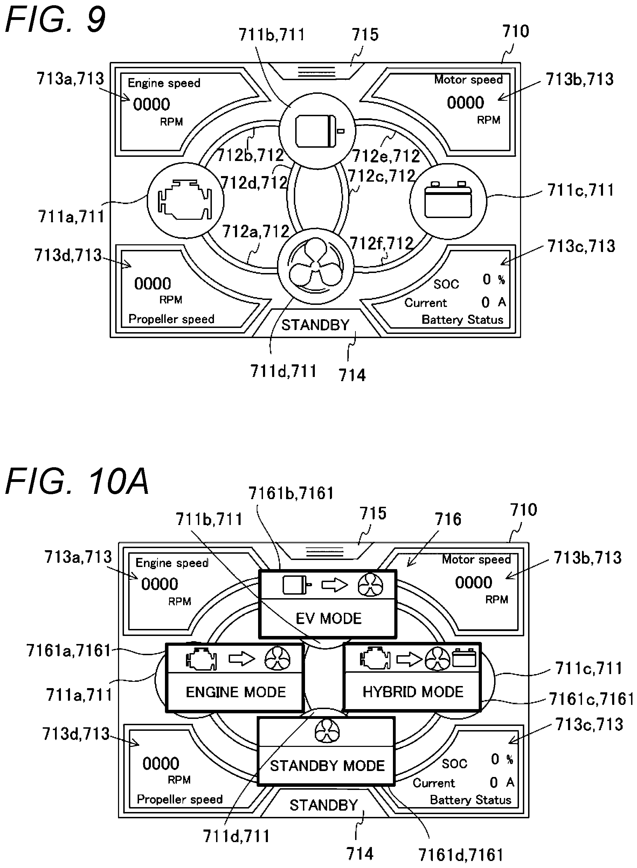

Fig. 9 is a schematic view showing the configuration of a main screen 710 for collectively displaying the operation status. The main screen 710 is a screen for displaying important information to the occupant of the ship and mainly used in normal times. The main screen 710 has a rectangular shape whose right-left length is longer than an up-down length. Note that the shape of the screen may be appropriately changed.

As shown in Fig. 9, symbols 711 representing the components forming the hybrid system SYS1 and linear portions 712 connecting a plurality of symbols 711 to each other are displayed on the main screen 710. As will be described later, at least part of the plurality of linear portions 712 changes its display form according to, e.g., the operation status of the hybrid system SYS1.

Specifically, the plurality of symbols 711 includes a symbol 711a representing the engine 1, a symbol 711b representing the motor generator 2, a symbol 711c representing the battery 4, and a symbol 711d representing the propelling machine 10. Note that hereinafter, the symbol 711a representing the engine 1 may be referred to as an engine symbol 711a, the symbol 711b representing the motor generator 2 may be referred to as a motor generator symbol 711b, the symbol 711c representing the battery 4 may be referred to as a battery symbol 711c, and the symbol 711d representing the propelling machine 10 may be referred to as a propelling machine symbol 711d.

Each of the symbols 711a to 711d may be, for example, a figure, a code, a character, a character string, or a symbol mark. In the present embodiment, each of the symbols 711a to 711d is a figure including a combination of a symbol mark associated with each component and a circle surrounding the symbol mark. Specifically, the engine symbol 711a is a figure in which a symbol mark associated with the engine is surrounded by a circle. The motor generator symbol 711b is a figure in which a symbol mark associated with the motor generator is surrounded by a circle. The battery symbol 711c is a figure in which a symbol mark associated with the battery is surrounded by a circle. The propelling machine symbol 711d is a figure in which a symbol mark associated with the propeller is surrounded by a circle.

The four symbols 711a to 711d are each at the vertices of the rhombus, and are positioned at the center of the main screen 710. Specifically, the engine symbol 711a is arranged closer to the left with respect to the center position of the main screen 710. The motor generator symbol 711b is arranged closer to the top with respect to the center position of the main screen 710. The battery symbol 711c is arranged closer to the right with respect to the center position of the main screen 710. The propelling machine symbol 711d is arranged closer to the bottom with respect to the center position of the main screen 710. Note that the arrangement of the symbols 711a to 711d may be appropriately changed.

The linear portion 712 connecting the symbols 711 to each other may include a straight line, a curved line, or both. In the present embodiment, the linear portion 712 includes the curved line. Specifically, the plurality of linear portions 712 includes a first linear portion 712a, a second linear portion 712b, a third linear portion 712c, a fourth linear portion 712d, a fifth linear portion 712e, and a sixth linear portion 712f.

The first linear portion 712a connects the engine symbol 711a and the propelling machine symbol 711d to each other. The second linear portion 712b connects the engine symbol 711a and the motor generator symbol 711b to each other. The third linear portion 712c connects the motor generator symbol 711b and the propelling machine symbol 711d to each other. The first linear portion 712a, the second linear portion 712b, and the third linear portion 712c form arc portions of one circle passing through the engine symbol 711a, the motor generator symbol 711b, and the propelling machine symbol 711d.

The fourth linear portion 712d connects the motor generator symbol 711b and the propelling machine symbol 711d to each other. The fifth linear portion 712e connects the motor generator symbol 711b and the battery symbol 711c to each other. The sixth linear portion 712f connects the battery symbol 711c and the propelling machine symbol 711d to each other. The fourth linear portion 712d, the fifth linear portion 712e, and the sixth linear portion 712f form arc portions of one circle passing through the motor generator symbol 711b, the battery symbol 711c, and the propelling machine symbol 711d.

The main screen 710 further includes a status display unit 713 corresponding to each of the symbols 711a to 711d and indicating the status of the component of the hybrid system SYS 1. In the present embodiment, the status display unit 713 includes a plurality of status display units 713, and the plurality of status display units 713 is arranged separately from each other. Specifically, the status display units 713 include an engine status display unit 713a, a motor generator status display unit 713b, a battery status display unit 713c, and a propelling machine status display unit 713d. The four status display unit 713a to 713d are arranged so as to surround the four symbols 711a to 711d arranged at the center of the main screen 710.

The engine status display unit 713a displays the status of the engine 1 which is the component of the hybrid system SYS1 corresponding to the engine symbol 711a. The engine status display unit 713a has a character portion for displaying the rotation speed of the engine 1 and a surrounding line portion surrounding the character portion. The engine status display unit 713a is preferably arranged in the vicinity of the engine symbol 711a, and in the present embodiment, is arranged at an upper left portion on the main screen 710. Note that as the displayed contents of the engine status, for example, a status other than the engine speed, such as an engine temperature, may be displayed.

The motor generator status display unit 713b displays the status of the motor generator 2 which is the component of the hybrid system SYS1 corresponding to the motor generator symbol 711b. The motor generator status display unit 713b has a character portion for displaying the rotation speed of the motor generator 2 and a surrounding line portion surrounding the character portion. The motor generator status display unit 713b is preferably arranged in the vicinity of the motor generator symbol 711b, and in the present embodiment, is arranged at an upper right portion on the main screen 710. Note that as the displayed contents of the motor generator status, for example, a status other than the motor generator rotation speed, such as a motor generator temperature, may be displayed.

The battery status display unit 713c displays the status of the battery 4 which is the component of the hybrid system SYS1 corresponding to the battery symbol 711c. The battery status display unit 713c has a character portion for displaying the current value and charging rate (SOC) of the battery 4 and a surrounding line portion surrounding the character portion. The battery status display unit 713c is preferably arranged in the vicinity of the battery symbol 711c, and in the present embodiment, is arranged at a lower right portion on the main screen 710. Note that as the displayed contents of the battery status, a status other than the battery current and charging rate, such as a battery voltage or an SOC change amount per hour, may be displayed.

The propelling machine status display unit 713d displays the status of the propelling machine 10 which is the component of the hybrid system SYS1 corresponding to the propelling machine symbol 711d. The propelling machine status display unit 713d has a character portion for displaying the rotation speed of the propelling machine (propeller) 10 and a surrounding line portion surrounding the character portion. The propelling machine status display unit 713d is preferably arranged in the vicinity of the propelling machine symbol 711d, and in the present embodiment, is arranged at a lower left portion on the main screen 710. Note that as the displayed contents of the propelling machine status, a status other than the propeller rotation speed may be displayed.

A mode status display button 714 that displays the status of the operation mode and has a function as an operation button is displayed at a center portion of a lower portion in the right-left direction on the main screen 710. The mode status display button 714 is a software button (software key) configured using the touch panel. Specifically, the mode status display button 714 displays the current status of the operation mode using a character and a color. The occupant (user) of the ship 300 can easily grasp the current status of the operation mode by visually recognizing the mode status display button 714.

Note that examples of the current status of the operation mode include a status in any of the above-described ENG mode, EV mode, and HYB mode and these statuses are displayed as "ENGINE," "EV," and "HYBRID." These statuses are displayed using different colors. For example, "ENGINE," "EV," and "HYBRID" are displayed using "white characters on a blue background," "white characters on a green background," and "white characters on an orange background." The examples of the current status of the operation mode further include a standby mode (STB mode) indicated by "STANDBY" The STB mode indicates that an operation mode of driving the propelling machine 10 is selectable. In the example shown in Fig. 9, the mode status display button 714 indicates that the current status of the operation mode is the STB mode.

A menu button 715 is displayed at a center portion of an upper portion in the right-left direction on the main screen 710. The menu button 715 is a software button. When the menu button 715 is operated (specifically, touched), screen items to which the screen can transition are displayed. By touching an item to be displayed, the screen transitions to such a screen item.

### [2-2. Switching of operation mode]

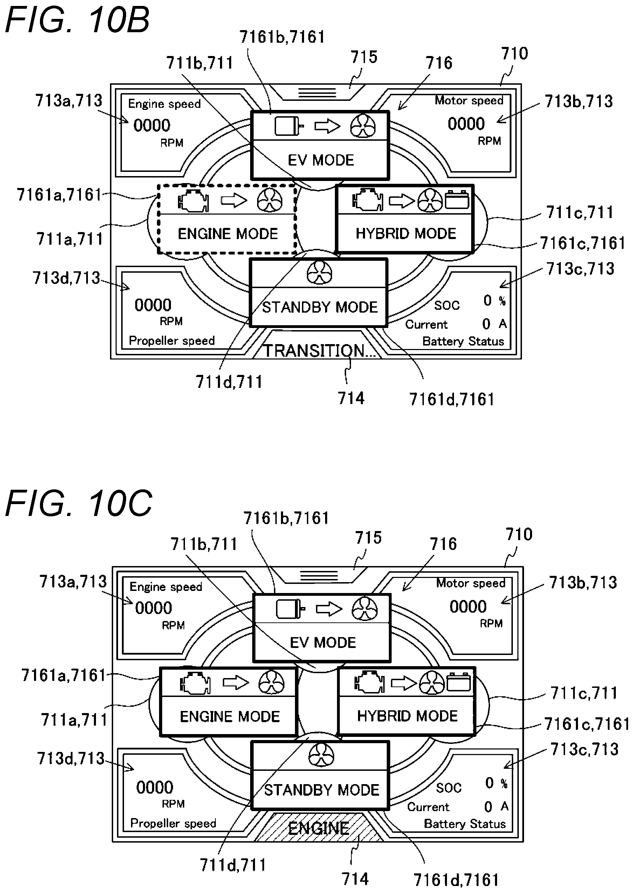

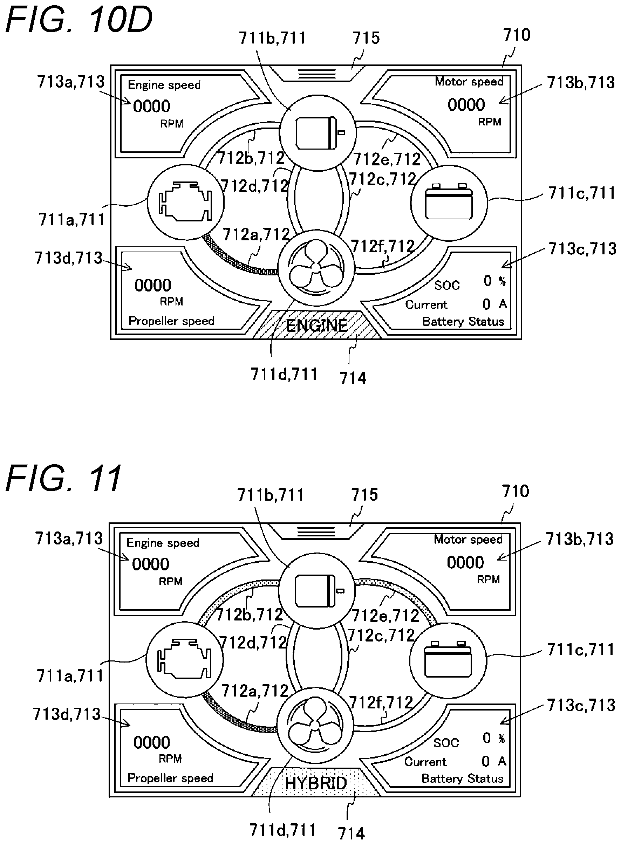

Next, switching of the operation mode with the display device 71 will be described. Figs. 10A to 10D are views showing a screen change in an operation of switching the operation mode. The screen change transitions in the order of Fig. 10A, Fig. 10B, Fig. 10C, and Fig. 10D.

In the display device 71, an operation mode switching menu set in the hybrid system SYS1 is displayed by operation of the operation unit displayed on the screen displaying the operation status. With this configuration, it is possible to avoid switching of the operation mode only by single operation of the operation unit on the screen. Thus, it is possible to prevent occurrence of a situation where the operation mode is immediately switched due to erroneous touch on the operation unit on the screen. That is, occurrence of erroneous operation can be prevented.

In the present embodiment, the operation unit displayed on the screen displaying the operation status is displayed on the main screen 710. More specifically, the operation unit displayed on the screen displaying the operation status is the mode status display button 714 that displays the status of the operation mode and functions as a button. In such a configuration, it is sufficient to operate the button indicating the current status of the operation mode at the time of switching the operation mode, and therefore, it is possible to easily intuitively recognize which button should be operated.

For example, when the mode status display button 714 displayed as "STANDBY" is touched on the screen shown in Fig. 9, an operation mode switching menu 716 as shown in Fig. 10A is displayed on the screen. The switching menu 716 is displayed so as to cover part of an image displayed on the screen at the time of operating an operation unit 714. With such a configuration, it is possible to prevent the state of the screen from greatly changing at the time of displaying the switching menu 716. Since the state of the screen does not greatly change, the contents displayed on the screen can be quickly recognized. In addition, since the switching menu 716 is displayed so as to cover part of the image displayed on the screen at the time of operating the operation unit 714, it is possible to display the switching menu 716 while leaving part of information displayed before the menu is displayed.

As shown in Fig. 10A, in the present embodiment, the switching menu 716 is displayed so as to cover an image displayed at a center portion on the main screen 710. More specifically, the switching menu 716 is displayed so as to cover the symbols 711 representing the components forming the hybrid system SYS 1. When the switching menu 716 is displayed, the information displayed on the four status display units 713a to 713d can be visually recognized. Moreover, when the switching menu 716 is displayed, the mode status display button 714 can be visually recognized, and the current status of the operation mode can be checked while the menu is displayed.

Specifically, the switching menu 716 includes a plurality of mode selection buttons 7161. The mode selection button 7161 is a software button to be operated by touching. The plurality of mode selection buttons 7161 includes an ENG mode selection button 7161a for selecting the ENG mode, an EV mode selection button 7161b for selecting the EV mode, an HYB mode selection button 7161c for selecting the HYB mode, and an STB mode selection button 7161d for selecting the STB mode.

Each of the plurality of mode selection buttons 7161 displays a symbol corresponding to a selection target among the symbols (e.g., symbols indicated by reference numerals 711 in Fig. 9) representing the components forming the hybrid system SYS1. With this configuration, it is possible to intuitively grasp the operation contents of the button only by looking at the mode selection button 7161.

Specifically, the ENG mode selection button 7161a is selected when the selection target is the ENG mode. The ENG mode is a mode for driving the propelling machine 10 by the engine 1. Thus, the ENG mode selection button 7161a displays corresponding symbols of the engine 1 and the propelling machine 10.

The EV mode selection button 7161b is selected when the selection target is the EV mode. The EV mode is a mode for driving the propelling machine 10 using the motor generator 2 as the motor. Thus, the EV mode selection button 7161b displays corresponding symbols of the motor generator 2 and the propelling machine 10.

The HYB mode selection button 7161c is selected when the selection target is the HYB mode. The HYB mode is a mode for driving the propelling machine 10 by the engine 1 and charging the battery 4 using the drive force of the engine 1. Thus, the HYB mode selection button 7161c displays corresponding symbols of the engine 1, the battery 4, and the propelling machine 10.

The STB mode selection button 7161d is selected when the selection target is the STB mode. The STB mode is a mode in which an element for driving the propelling machine 10 is not determined and which waits for selection of the element. Thus, the STB mode selection button 7161d displays only a corresponding symbol of the propelling machine 10.

In the present embodiment, each mode selection button 7161 has a rectangular shape, and has a configuration in which the above-described symbol is displayed on the upper side and the mode name to be selected is displayed on the lower side. The four mode selection buttons 7161 are displayed so as to cover the four symbols 711 displayed before the switching menu 716 is displayed. Each mode selection button 7161 is arranged so as to overlap with the symbol 711 related to the selection target. Specifically, the ENG mode selection button 7161a is arranged so as to overlap with the engine symbol 711a. The EV mode selection button 7161b is arranged so as to overlap with the motor generator symbol 711b. The HYB mode selection button 7161c is arranged so as to overlap with the battery symbol 711c. The STB mode selection button 7161d is arranged so as to overlap with the propelling machine symbol 711d. Note that these configurations (shapes and arrangement) of the mode selection button 7161 are merely examples and may be appropriately changed.

When any one of the plurality of mode selection buttons 7161 displayed on the screen is selected by touching, transition (shift) to the selected operation mode is started. Fig. 10B shows a screen example displayed when the ENG mode selection button 7161a is selected in Fig. 10A.

As shown in Fig. 10B, when the operation mode is transitioning according to menu operation, the switching menu 716 is changed to a display form for notifying that the operation mode is transitioning. With this configuration, it is possible to easily recognize that the operation mode is transitioning. In the example shown in Fig. 10B, the menu operation is touching of the mode selection button 7161. The change in the display form includes a change in the display form of the selected mode selection button 7161 and a change in the display form of the mode status display button 714. Specifically, when the operation mode is transitioning, the frame of the selected mode selection button 7161 blinks, and the indication on the mode status display button 714 changes to "TRANSITION" indicating that the operation mode is transitioning. In this example, along with the display of "TRANSITION," the background color of the mode status display button 714 is also changed to a corresponding color (for example, gray).

Note that the change in the display form indicating that the operation mode is transitioning is not limited to the above-described configuration and various changes can be made. For example, in the description above, two display forms of the mode selection button 7161 and the mode status display button 714 are changed, but one of these display forms may be changed. In addition, the change in the display form of the mode selection button 7161 is not limited to the blinking of the frame of the mode selection button 7161, and other forms which can notify that the operation mode is transitioning may be used. The other forms may include, for example, a display color change, display of a mark for notifying that the transition is in progress, and a display color change in the above-described mark. In addition, the display form of the mode status display button 714 may be changed to other forms, and for example, the mode status display button 714 may blink.

Fig. 10C shows a screen example at the time when the transition of the operation mode accompanied by the selection of the mode selection button 7161 is completed. As shown in Fig. 10C, when the transition of the operation mode is completed, the display form for notifying that the operation mode is transitioning ends. Specifically, the blinking of the frame of the mode selection button 7161 ends. That is, the mode selection button 7161 is no longer in the blinking state. In addition, the display form of the mode status display button 714 is changed to a form indicating the transitioned operation mode. In Fig. 10C, the mode status display button 714 is changed from the form indicating the STB mode to the form indicating the ENG mode.

Fig. 10D shows a screen example at the time when a certain period of time has elapsed after completion of the transition of the operation mode. As shown in Fig. 10D, the switching menu 716 is hidden after a lapse of the certain period of time after completion of the transition of the operation mode. The certain period may be appropriately set, and for example, is five seconds. The switching menu 716 may be hidden simultaneously with completion of the transition of the operation mode. The switching menu 716 is hidden after a lapse of the certain period of time as in the present embodiment, and therefore, it is possible to reliably recognize that an operation of causing the operation mode to transition has been reflected. Note that in the present embodiment, when the certain period of time has elapsed without the transition operation after the switching menu 716 has been displayed, the switching menu 716 is also hidden. This can reduce the possibility of erroneous operation.

As shown in Fig. 10D, when the switching menu 716 is hidden after completion of the transition of the operation mode, the symbols 711 representing the components forming the hybrid system SYS1 and the linear portions 712 connecting the plurality of symbols 711 to each other are displayed on the main screen 710. At this time, the linear portion 712 is in a display form according to the operation mode. Specifically, the linear portion 712 is in such a display form that the flow of energy (energy flow) according to the operation mode is grasped at a glance. In the present embodiment, the linear portion 712 has different colors in the case of a flow in a direction of consuming energy, the case of a flow in a direction of regenerating energy, and the case where there is no flow of energy. For example, the display color of the linear portion 712 is green for the flow in the direction of consuming energy, blue for the flow in the direction of regenerating energy, and white in the case where there is no flow of energy.

In the example shown in Fig. 10D, since the operation mode is the ENG mode, a flow in a direction of consuming energy is generated from the engine 1 to the propelling machine 10. Thus, in order to display the mode in the form according to the operation mode, the color of the first linear portion 712a connecting the engine symbol 711a and the propelling machine symbol 711d to each other is green, and the other linear portions are in white.

Fig. 11 is a view showing a screen example when the operation mode has transitioned to the HYB mode by operation of the mode status display button 714 on the screen shown in Fig. 10D. In the example shown in Fig. 11, since the operation mode is the HYB mode, a flow in a direction of consuming energy is generated from the engine 1 to the propelling machine 10. In addition, a flow in a direction of regenerating energy is generated from the engine 1 to the battery 4 via the motor generator 2. Thus, the first linear portion 712a connecting the engine symbol 711a and the propelling machine symbol 711d to each other is in green. In addition, the second linear portion 712b connecting the engine symbol 711a and the motor generator symbol 711b to each other and the fifth linear portion 712e connecting the motor generator symbol 711b and the battery symbol 711c to each other are in blue. The other linear portions are in white.

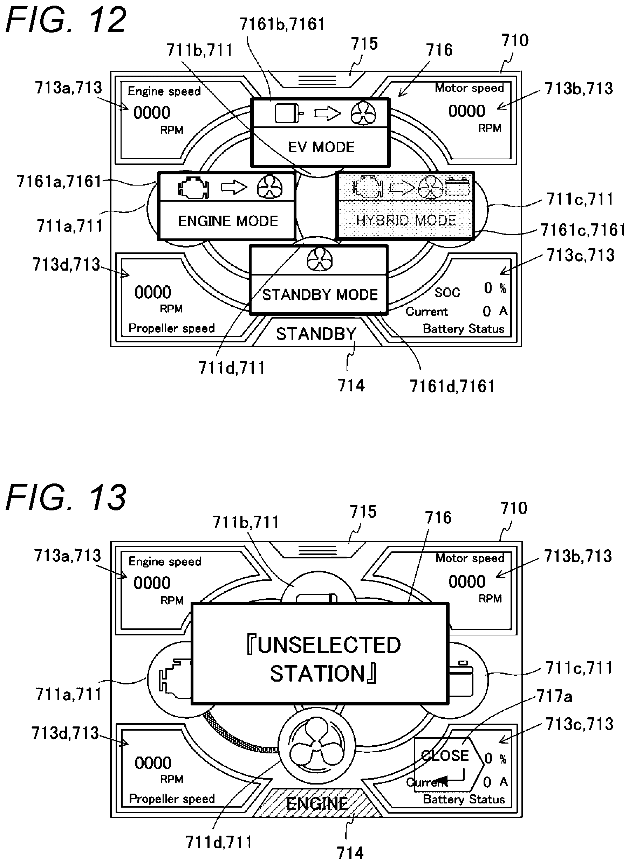

In some cases, among the plurality of operation modes set in the hybrid system SYS1, there may be an operation mode (unswitchable mode) which cannot be switched (transitioned) from the current operation mode due to, e.g., occurrence of an abnormality. Fig. 12 is a view showing a screen example when the operation modes include the unswitchable mode.

As shown in Fig. 12, in the present embodiment, when the operation modes include a switchable mode and the unswitchable mode, the switching menu 716 is displayed such that these modes are distinguished from each other. The switchable mode and the unswitchable mode are displayed so as to be distinguished from each other, and therefore, the occupant of the ship 300 can easily grasp to which operation mode the mode cannot be switched.

In the present embodiment, when there is the unswitchable mode, the mode selection button 7161 for selecting transition (switching) to such a mode is grayed out. In the example shown in Fig. 12, the HYB mode is an unswitchable mode, and the other modes (ENG mode, EV mode, and STB mode) are switchable modes. The HYB mode selection button 7161c for selecting the transition to the HYB mode which is the unswitchable mode is grayed out. The mode selection buttons 7161 for selecting the transition to the other modes are not grayed out.

Note that any form may be used as long as it is possible to distinguish the switchable mode and the unswitchable mode from each other, and a form other than the grayed-out form may be used. For example, a character or a symbol indicating that the mode cannot be switched may be displayed on the mode selection button 7161 for selecting the transition to the unswitchable mode. Examples of the above-described character include "NG." Examples of the above-described symbol include "X (cross mark)."

In the present embodiment, as described above, the number of stations ST is a plural number, and the display device 71 is arranged for each station ST (see Fig. 8). In consideration of this point, when operation of another display device 71 different from the subject display device 71 is enabled, the subject display device 71 hides the switching menu 716 even when the operation unit (mode status display button) 714 is operated. With this configuration, it is possible to prevent simultaneous operation by the plurality of display devices 71. That is, occurrence of erroneous operation can be prevented. Examples of the case where operation of the another display device 71 is enabled (i.e., a case where operation of the subject device is not enabled) include a case where an operation mode switching command is made by the another display device 71 and the operation mode is transitioning.

Fig. 13 is a view showing a screen example when the mode status display button 714 has been operated in the display device 71 in which operation of the mode status display button 714 is not enabled. As shown in Fig. 13, in the present embodiment, when operation of the mode status display button 714 is not enabled, not only the switching menu 716 is simply hidden, but also a pop-up message 717 is displayed. At this time, a buzzer may be sounded. As the pop-up message 717, e.g., a character notifying that operation is not enabled is displayed. In the example shown in Fig. 13, the pop-up message 717 includes "UNSELECTED STATION" for notifying that operation is not enabled. Note that the pop-up message 717 includes a close button 717a. The pop-up message 717 is hidden by touching the close button 717a. The pop-up message 717 may be hidden after a lapse of a certain period of time.

### [2-3. External charging mode]

In the present embodiment, as the operation status in the hybrid system SYS1, there is an external charging mode in which charging is performed using a power source outside the ship 300 (specifically, on land). The external charging mode is a special mode in the ship 300, and a switch (ON/OFF switch) for the mode is provided at a place different from the display device 71.

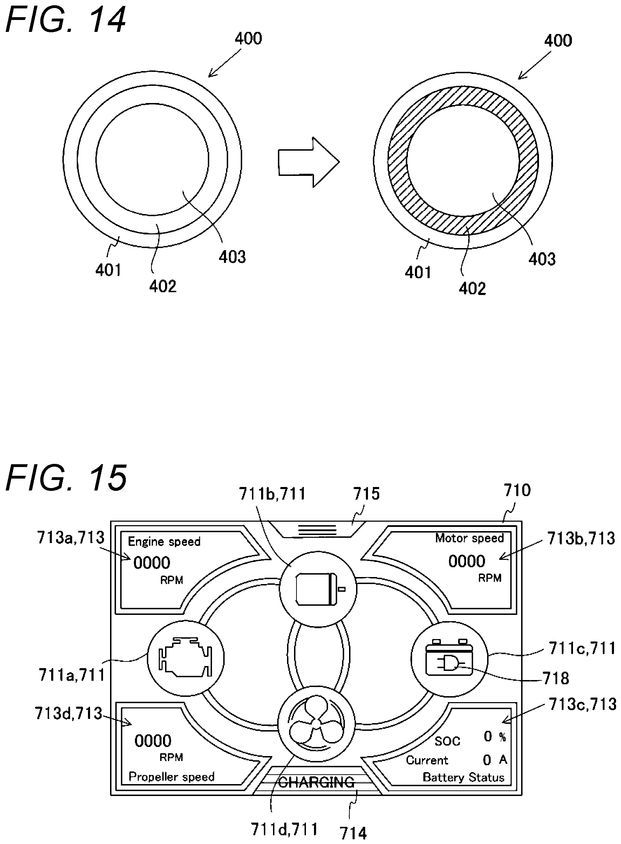

Fig. 14 is a view for describing a switch 400 for the external charging mode in the ship 300. In Fig. 14, the left side shows a case where the switch 400 is in an OFF state, and the right side shows a case where the switch 400 is in an ON state. The switch 400 is a hardware switch. The switch 400 includes an outer shell 401, a light emitting unit 402 arranged inside the outer shell 401, and a movable unit 403 arranged inside the light emitting unit 402. When the movable unit 403 is pressed down in the OFF state, the switch 400 is turned on. In the ON state, the light emitting unit 402 is turned on. By checking the lighting state of the light emitting unit 402, it is possible to easily recognize whether or not the mode is the external charging mode. Note that when the movable unit 403 is pressed down in the ON state, the switch 400 is turned off.

Fig. 15 is a view showing a screen example of the main screen 710 when the switch 400 for the external charging mode is in the ON state. As shown in Fig. 15, when the switch 400 is turned on, an external charging mode symbol 718 indicating the external charging mode for performing charging using the power source outside the ship 300 is displayed on the screen 710. With this configuration, it is possible to easily confirm that charging is being performed in the external charging mode by viewing the display screen of the display device 71. The external charging mode symbol 718 is preferably a symbol associated with charging, and is a figure representing a plug in the present embodiment. With such a configuration, the occupant (user) viewing the main screen 710 can easily recognize that the mode is the external charging mode. In the present embodiment, the external charging mode symbol 718 is arranged inside the battery symbol 711c so that it can be more easily and intuitively recognized that the battery 4 is being charged. Note that the shape and arrangement of the external charging mode symbol 718 may be appropriately changed.

Note that in the present embodiment, when the switch 400 is in the ON state, the indication on the mode status display button 714 is "CHARGING" for notifying that charging is being performed. Along with the display of "CHARGING," the background color of the mode status display button 714 is also changed to a corresponding color (for example, yellow).

### [2-4. Display upon occurrence of abnormal state or warning state]

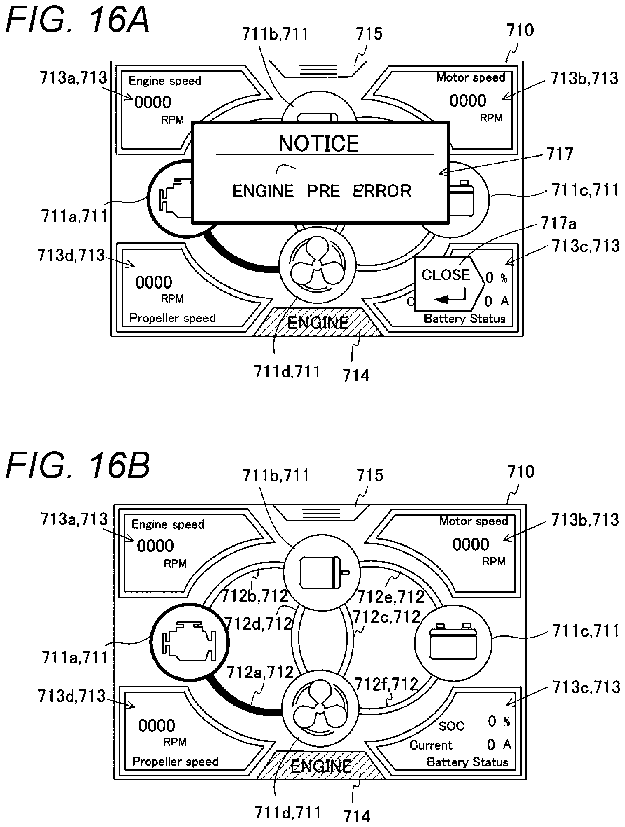

Fig. 16A is a view showing a screen example when an abnormal state or a warning state has occurred in the hybrid system SYS1. Note that the warning state is a state in which no abnormality currently occurs in the hybrid system SYS1, but an abnormality may occur in the future. When the abnormal state or the warning state has occurred, the pop-up message 717 for notifying such a state is displayed as shown in Fig. 16A. Specifically, Fig. 16A shows the warning state, and the beginning of a notification sentence in the pop-up message 717 is "NOTICE." In the abnormal state, the beginning of the notification sentence in the pop-up message 717 is "WARNING."

The pop-up message 717 can be hidden by touching the close button 717a. Even when the pop-up message 717 is hidden even though the warning state or the abnormal state has not been resolved, it is convenient to easily recognize, e.g., occurrence of the warning state on the screen. In the present embodiment, a configuration considering this point is adopted.

Fig. 16B is a view showing a screen example when the pop-up message 717 in Fig. 16A is hidden. Note that in Fig. 16B, it is assumed that the warning state causing the pop-up message 717 in Fig. 16 A has not been resolved. As shown in Fig. 16B, in the present embodiment, when there is a component (component forming the hybrid system) for which a warning is to be made or an abnormality is to be notified, a symbol representing such a component is highlighted. With this configuration, the occupant of the ship 300 viewing the screen of the display device 71 can easily recognize that, e.g., the abnormal state has occurred even after the pop-up message has been hidden.

In the example shown in Fig. 16B, since the warning state has occurred in the engine 1, the engine symbol 711a is highlighted. The highlighting widely includes a display form in which a corresponding portion is make stand out. In the example shown in Fig. 16B, thickening of a frame line and changing of the color of the thickened frame line are adopted as the highlighting of the symbol 711. However, this is merely an example. Only one of the thickening of the frame line and the changing of the color of the frame line may be adapted as the highlighting. The highlighting may include other forms. For example, the color of the entire symbol 711 may be changed, or the symbol 711 may blink. The highlighting method may be changed between the warning state and the abnormal state. For example, the color used for highlighting may be changed between the abnormal state and the warning state. For example, orange may be used in the case of the highlighting for the warning state, and red may be used in the case of the highlighting for the abnormal state.

Note that in the example shown in Fig. 16B, the display form is changed not only for the symbol 711a representing the component (engine 1) in which the warning state has occurred, but also for the linear portion 712 (portion indicating the energy flow) related to the relationship between such a component and the operation mode. Specifically, in Fig. 16B, the warning state has occurred in the engine 1 in the ENG mode in which power flows from the engine 1 to the propelling machine 10. Thus, the color of the first linear portion 712a connecting the engine symbol 711a and the propelling machine symbol 711d to each other is changed from green to orange.

### <3. Control device>

Next, plural types of control executed by the control device 5 in the ship 300 (hybrid system SYS1) will be described with specific examples.

### [3-1. Control of transition of operation mode]

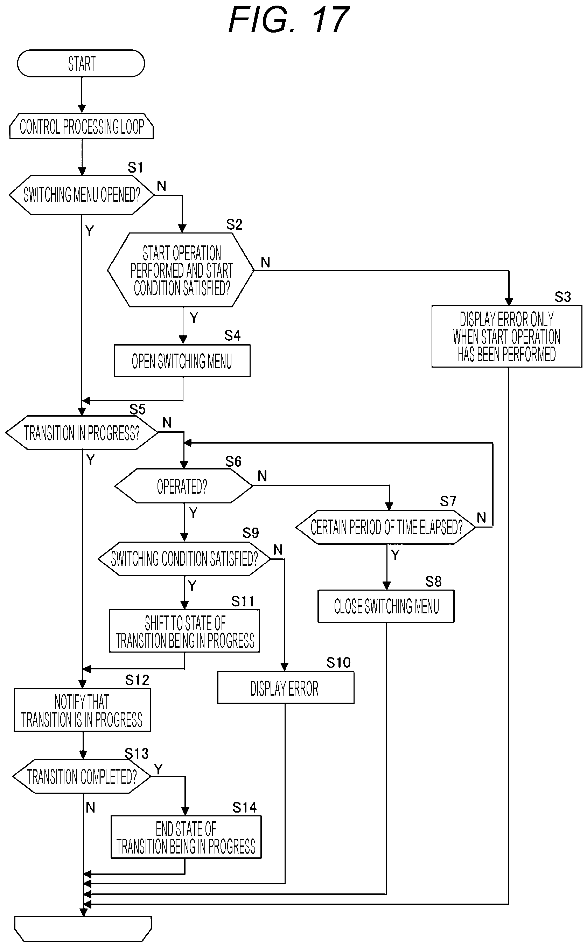

Fig. 17 is a flowchart showing, as an example, the flow of control of the transition of the operation mode. A control processing loop shown in Fig. 17 is started by activation of the control device 5. Note that the processing shown in Fig. 17 may be performed by either the helm ECU (first control device) 51 or the hybrid ECU (second control device) 52, or may be performed in cooperation by these ECUs. Thus, these ECUs will be simply referred to as the control device 5.

In Step S1, the control device 5 determines whether or not the operation mode switching menu 716 (see, e.g., Fig. 10A) is opened on the display device 71. When the switching menu 716 is opened (Yes in Step S1), the processing proceeds to Step S5. When the switching menu 716 is not opened (No in Step S1), the processing proceeds to Step S2.

In Step S2, the control device 5 determines whether or not an operation of starting switching the operation mode has been performed and whether or not a switching start condition has been satisfied. When the mode status display button 714 has been touched on the display device 71, it is determined that the operation of starting switching the operation mode has been performed. The start condition includes a plurality of conditions, and when any one of the start conditions is not satisfied, it is determined that the start condition is not satisfied. For example, it is determined that the start condition is not satisfied, e.g., in a case where the ship steering control with the hybrid function is not set, a case where a communication abnormality has occurred, or a case where operation is performed by the display device 71 of the station ST which is not valid. When it is determined that the start operation has been performed and the start condition has been satisfied (Yes in Step S2), the processing proceeds to Step S4. On the other hand, when it is determined that the start operation is not performed, the start condition is not satisfied, or both (No in Step S2), the processing proceeds to Step S3.

In Step S3, the control device 5 instructs the display device 71 to display an error when it is determined in Step S2 that the start condition is not satisfied although the start operation has been performed, and determines that it is not necessary to display an error in other cases. Note that the error is displayed to notify the occupant of the ship 300 that the operation mode cannot be switched. When the processing in Step S3 is completed, the processing is returned to the start of the control processing loop, and the processing in Step S1 and the subsequent steps is performed.

In Step S4, the control device 5 instructs the display device 71 to open the switching menu 716 in response to the operation of starting switching the operation mode. In response, the display device 71 displays the switching menu 716. When the processing in Step S4 is completed, the processing proceeds to Step S5.

In Step S5, the control device 5 determines whether or not the operation mode is transitioning. Note that when the mode selection button 7161 (button in the switching menu 716) is operated in the display device 71, the transition is in progress. When the transition is in progress (Yes in Step S5), the processing proceeds to Step S12. When the transition is not in progress (No in Step S5), the processing proceeds to Step S6.

In Step S6, the control device 5 determines whether or not an operation of switching the operation mode has been performed. Here, whether or not the operation of switching the operation mode has been performed is determined by whether or not the mode selection button 7161 on the display device 71 has been operated. When the operation of switching the operation mode has been performed (Yes in Step S6), the processing proceeds to Step S9. When the operation of switching the operation mode is not performed (No in Step S6), the processing proceeds to Step S7.

In Step S7, the control device 5 determines whether or not a certain period of time (for example, five seconds) has elapsed after opening of the switching menu 716. When the certain period of time is not elapsed (No in Step S7), the processing returns to Step S6. When the certain period of time has been elapsed (Yes in Step S7), the processing proceeds to Step S8.

In Step S8, the control device 5 instructs the display device 71 to close the switching menu 716. That is, in the display device 71, the switching menu 716 is automatically hidden when not operated for a certain period of time after having been displayed. When the processing in Step S8 is completed, the processing is returned to the start of the control processing loop, and the processing in Step S1 and the subsequent steps is performed.

In Step S9, the control device 5 checks whether or not a switching condition is satisfied in order to check whether or not the switching operation is started according to the operation of switching the operation mode. The switching condition is not satisfied, for example, when the ship steering lever (shift lever) included in the control head 73 is not at a neutral position. When the switching condition has been satisfied (Yes in Step S9), the processing proceeds to Step S11. When the switching condition is not satisfied (No in Step S9), the processing proceeds to Step S10.

In Step S10, since the switching condition is not satisfied, the control device 5 instructs the display device 71 to display an error. Note that the error is displayed to notify the occupant of the ship 300 that the operation mode cannot be switched. When the processing in Step S10 is completed, the processing is returned to the start of the control processing loop, and the processing in Step S1 and the subsequent steps is performed.

In Step S11, in order to satisfy the switching condition, the control device 5 starts the transition, and shifts to a state of the transition being in progress. The transition to the state of the transition being in progress corresponds to, for example, setting (turning on) a flag. When the state shifts to the state of the transition being in progress, the processing proceeds to Step S12.

In Step S12, the control device 5 notifies the display device 71 of the state of the transition of the operation mode being in progress. In response to the notification, the display device 71 displays an indication of the transition being in progress (for example, blinks the mode selection button 7161). When the notification of the state of the transition being in progress is made, the processing proceeds to Step S13.

In Step S13, the control device 5 determines whether or not the transition of the operation mode has been completed. When the transition has been completed (Yes in Step S 13), the processing proceeds to Step S14. When the transition is not completed (No in Step S13), the processing is returned to the start of the control processing loop, and the processing in Step S1 and the subsequent steps is performed.

In Step S14, the control device 5 ends the state of the transition being in progress. The end of the state of the transition being in progress corresponds to, for example, releasing (turning off) the flag set in the state of the transition being in progress. When the state of the transition being in progress ends, the display device 71 is notified of such an end. In response to the end of the transition, the display device 71 performs, e.g., processing of hiding the switching menu 716 after a lapse of a certain period of time. When the processing in Step S14 is completed, the processing is returned to the start of the control processing loop, and the processing in Step S1 and the subsequent steps is performed.

### [3-2. Control related to battery]

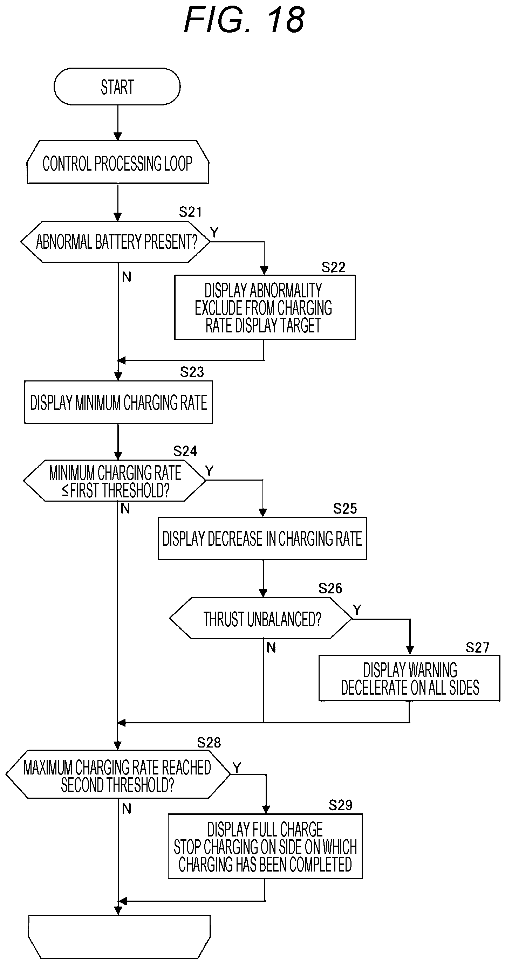

Fig. 18 is a flowchart showing, as an example, the flow of control related to the battery. A control processing loop shown in Fig. 18 is started by activation of the control device 5. Note that the processing shown in Fig. 18 may be performed by either the helm ECU (first control device) 51 or the hybrid ECU (second control device) 52, or may be performed in cooperation by these ECUs. Thus, these ECUs will be simply referred to as the control device 5.

In Step S21, the control device 5 determines whether or not there is a battery 4 in the abnormal state among the plurality of batteries 4. In the present embodiment, the plurality of batteries 4 includes two batteries 4 which are the battery 4 in the port-side hybrid system SYS1L and the battery 4 in the starboard-side hybrid system SYS1R. The abnormal state of the battery 4 corresponds to, for example, a state in which a voltage value is abnormal. Whether or not the battery 4 is abnormal can be determined by information obtained from the BMS 41. If there is even one battery 4 in the abnormal state (Yes in Step S21), the processing proceeds to Step S22. If there is no battery 4 in the abnormal state (No in Step S21), the processing proceeds to Step S23.

In Step S22, the control device 5 instructs the display device 71 to display an abnormality. In response, the display device 71 displays a pop-up message for notifying the abnormality. Note that at this time, the battery symbol 711c displayed on the main screen 710 may be highlighted as described above. In addition, the control device 5 excludes the battery 4 in the abnormal state from those for which the charging rate (SOC in the present embodiment) is displayed on the display device 71. When the processing in Step S22 is completed, the processing proceeds to Step S23.

In Step S23, the control device 5 instructs the display device 71 to display, as a representative value, the minimum charging rate among the charging rates of the plurality of batteries 4. That is, the control device 5 causes the display device 71 to display the minimum charging rate among the charging rates of the batteries 4 included in the plurality of hybrid systems SYS 1. Although the charge rates of the plurality of batteries 4 may be individually displayed on the display device 71, the minimum charging rate is displayed as the representative value as in the present embodiment, so that the occupant of the ship 300 can easily recognize the necessity of charging. When displaying the main screen 710, the display device 71 instructed to display the minimum charging rate displays the minimum charging rate at a charging rate (SOC) portion on the battery status display unit 713c. When the processing in Step S23 is completed, the processing proceeds to Step S24.

In Step S24, the control device 5 determines whether or not the minimum charging rate among the charging rates of the plurality of batteries 4 is a preset first threshold or less. The first threshold is an allowable lower limit of the charging rate of the battery 4. When the minimum charging rate is the first threshold or less (Yes in Step S24), the processing proceeds to Step S25. When the minimum charging rate is greater than the first threshold (No in Step S24), the processing proceeds to Step S28.

In Step S25, the control device 5 instructs the display device 71 to display a decrease in the charging rate. That is, when there is a battery 4 which needs to be charged in even one of the plurality of hybrid systems SYS1, the control device 5 performs notification processing of notifying insufficient charging. With this configuration, it is possible to prevent occurrence of, e.g., drifting due to out of battery. The display device 71 instructed to display the decrease in the charging rate displays a pop-up message for notifying the decrease in the charging rate of the battery 4. When the processing in Step S25 is completed, the processing proceeds to Step S26.

In Step S26, the control device 5 determines whether or not thrust is unbalanced as the charging rate decreases. For example, in the EV mode, when the charging rate is the first threshold or less only on one of the port side or the starboard side, the control device 5 determines that the thrust is insufficient only on one side and is unbalanced. When it is determined that the thrust is unbalanced (Yes in Step S 26), the processing proceeds to Step S27. When it is determined that the thrust is not unbalanced (No in Step S 26), the processing proceeds to Step S28.

In Step S27, the control device 5 causes the display device 71 to display a warning for notifying the thrust unbalance. In response, the display device 71 displays a pop-up message for notifying the thrust unbalance. In addition, the control device 5 performs ship steering processing of decelerating the ship on all sides (in the present embodiment, the port side and the starboard side). Although the rotation speed of the propelling machine 10 is preferably the same among all sides, the rotation speeds may be individually adjustable. Alternatively, the ship may be temporarily stopped instead of decelerating. That is, when it is estimated that the thrust is unbalanced among the plurality of hybrid systems SYS1, the control device 5 causes the display device 71 to display an indication for notifying the unbalance. In addition, when it is estimated that the thrust is unbalanced among the plurality of hybrid systems SYS1, the control device 5 causes the plurality of hybrid systems SYS1 to decelerate or stop the ship. With this configuration, it is possible to prevent the ship 300 from moving unintentionally. When the processing in Step S27 is completed, the processing proceeds to Step S28.

In Step S28, the control device 5 determines whether or not the maximum charging rate among the charging rates of the plurality of batteries 4 has reached a preset second threshold. The second threshold is an allowable upper limit of the charging rate of the battery 4. When the maximum charging rate has reached the second threshold (Yes in Step S28), the processing proceeds to Step S29. When the maximum charging rate does not reach the second threshold (No in Step S28), it is determined that there is no particular problem, the processing is returned to the start of the control processing loop, and the processing in Step S21 and the subsequent steps is performed.

In Step S29, the control device 5 causes the display device 71 to display a warning for notifying full charge. In response, the display device 71 displays a pop-up message for notifying the full charge. That is, the pop-up message for notifying the full charge is displayed for each hybrid system SYS 1. Note that the message may be displayed only when all the hybrid systems SYS1 are fully charged. In addition, in order to prevent overcharge, the control device 5 stops charging the hybrid system SYS1 on the side having the charged battery 4. That is, the control device 5 detects the charging rate of the battery 4 for each hybrid system SYS1, and stops the charging of the hybrid system SYS1 having a charging rate of a predetermined value or more. Note that for the hybrid system SYS1 for which the full charge has been detected, only the charging is stopped, and the operation mode is not changed. It is possible to appropriately control the state of charge of the battery 4 by switching each hybrid system SYS1 between charging and temporary stop of charging while setting the same operation mode in all the hybrid systems SYS1. With this configuration, e.g., occurrence of fire due to overcharge can be prevented. The battery 4 whose charging has been stopped is excluded from those for which the determination on the maximum charging rate is made in Step S28.

When the processing in Step S29 is completed, the processing is returned to the start of the control processing loop, and the processing in Step S21 and the subsequent steps is performed.

### [3-3. Processing related to functional restriction]

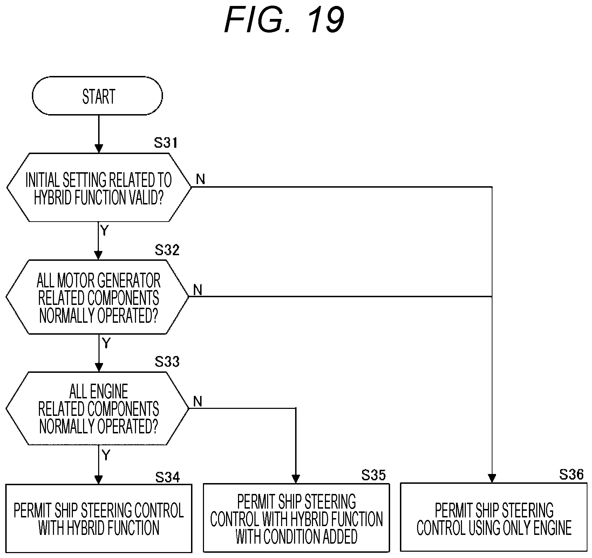

Fig. 19 is a flowchart showing, as an example, the flow of processing related to functional restriction on the ship steering control. The flow shown in Fig. 19 is executed, for example, when the control device 5 is activated, when there is a ship steering resumption request after temporary stop of ship steering, and when there is an operation mode switching request from the display device 71. Note that the processing shown in Fig. 19 may be performed by either the helm ECU (first control device) 51 or the hybrid ECU (second control device) 52, or may be performed in cooperation by these ECUs. Thus, these ECUs will be simply referred to as the control device 5.

In Step S31, the control device 5 determines whether or not an initial setting related to the hybrid function is valid. The initial setting may include, e.g., whether or not the communication connection of the hybrid ECU 52 is normal. When the initial setting related to the hybrid function is valid (Yes in Step S31), the processing proceeds to Step S32. When the initial setting related to the hybrid function is not valid (No in Step S31), the processing proceeds to Step S36.

In Step S32, the control device 5 determines whether or not the motor generator 2 and all the devices (inverter 21, battery 4, etc.) related thereto are normally operated. When all the devices are normally operated (Yes in Step S32), the processing proceeds to Step S33. When even one of these devices is not normally operating (No in Step S32), the processing proceeds to Step S36.

In Step S33, the control device 5 determines whether or not the engine 1 and all the devices (engine ECU 11, drive ECU 33, etc.) related thereto are normally operated. When all the devices are normally operated (Yes in Step S33), the processing proceeds to Step S34. When even one of these devices is not normally operating (No in Step S33), the processing proceeds to Step S35.

In Step S34, since the engine 1 and its related components and the motor generator 2 and its related components can be used, the control device 5 permits the ship steering control with the hybrid function. In this case, the transition to any of the ENG mode, the EV mode, and the HYB mode is also permitted.

In Step S35, since the motor generator 2 and its related components can be used but the engine 1 and its related components cannot be used, the control device 5 permits the ship steering control with the hybrid function with a condition added. In this case, only the transition to the EV mode is permitted, and the transition to the ENG mode and the HYB mode is prohibited.

In Step S36, since the ship steering control using the hybrid function cannot be used, the control device 5 permits the ship steering control using only the engine 1 (ship steering control without the hybrid function). In this case, the transition to the EV mode and the HYB mode is prohibited.

In the present embodiment, the ship 300 includes the plurality of hybrid systems SYS1. When in the above-described processing of determining the functional restriction, it is determined in even one of the plurality of hybrid systems SYS1 that the ship steering control using the engine 1 is impossible, the transition to the ENG mode and the HYB mode is prohibited for all the hybrid systems SYS 1. When in the above-described processing of determining the functional restriction, it is determined in even one of the plurality of hybrid systems SYS1 that the ship steering control using the motor generator 2 is impossible, the transition to the EV mode and the HYB mode is prohibited for all the hybrid systems SYS1.

That is, in the present embodiment, when there is an unusable operation mode in even one of the plurality of hybrid systems SYS1, the control device 5 prohibits the shift (transition) to the unusable operation mode for all the hybrid systems SYS1. With this configuration, it is possible to prevent occurrence of dangerous operation due to operation mode inconsistency.

Note that when drive of the motor generator 2 is prohibited, there may be a hybrid system SYS1 which can use the motor generator 2 among the plurality of hybrid systems SYS 1. In such a case, the charge operation may be permitted for the hybrid system SYS1 which can use the motor generator 2.

### [3-4. Recovery control after stop due to abnormality]

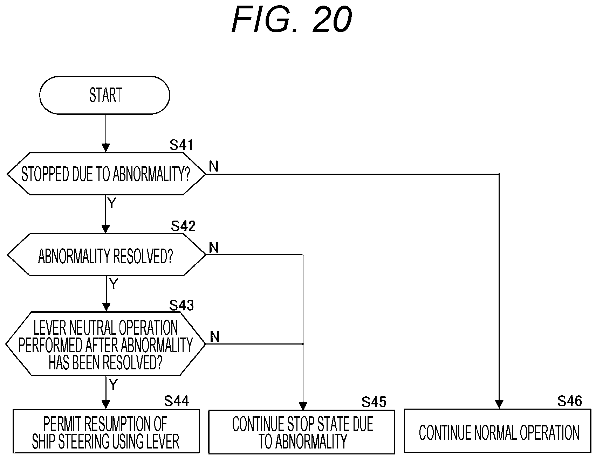

Fig. 20 is a flowchart showing, as an example, the flow of recovery control after stop due to an abnormality. Note that the processing shown in Fig. 20 may be performed by either the helm ECU (first control device) 51 or the hybrid ECU (second control device) 52, or may be performed in cooperation by these ECUs. Thus, these ECUs will be simply referred to as the control device 5.

In Step S41, the control device 5 determines whether or not propelling (navigation) of the ship 300 is stopped due to the abnormality. The stop of the propelling includes a case where rotation of the engine 1 is stopped and a case where rotation of the motor generator 2 functioning as the motor is stopped. If the propelling has been stopped due to occurrence of the abnormality and then has not been resumed, this situation corresponds to the stop due to the abnormality. For example, the propelling is stopped when it is determined that the thrust is unbalanced. When the propelling has been stopped due to the abnormality (Yes in Step S41), the processing proceeds to Step S42. When the propelling is not stopped due to the abnormality (No in Step S41), the processing proceeds to Step S46.

In Step S42, the control device 5 determines whether or not the abnormality has been resolved. When the abnormality has been resolved (Yes in Step S42), the processing proceeds to Step S43. When the abnormality is not resolved (No in Step S42), the processing proceeds to Step S45.

In Step S43, the control device 5 determines whether or not an operation of returning the shift lever included in the control head 73 to the neutral position has been performed (neutral operation has been performed) after the abnormality has been resolved. When the neutral operation has been performed (Yes in Step S43), the processing proceeds to Step S44. When the neutral operation is not performed (No in Step S43), the processing proceeds to Step S45. Note that in the present embodiment, since the hybrid systems SYS1 are provided for both the port and starboard sides, when the shift levers on both sides have been returned to the neutral position, it is determined that the above-described neutral operation has been performed, and when only one of the shift levers has been returned to the neutral position, it is determined that the neutral operation is not performed.

In Step S44, the control device 5 determines that the ship steering can be safely resumed, and permits resumption of the ship steering using the shift lever.

In Step S45, since the abnormality is not resolved or the neutral operation on the lever is not completed, the control device 5 continues the stop state due to the abnormality. That is, in the present embodiment, the control device 5 does not permit the ship steering using a shift operation unit (in this example, the lever of the control head 73) unless the shift operation unit is returned to the neutral position after the stop. With this configuration, it is possible to prevent sudden start of navigation of the ship 300 at unintended timing.

In Step S46, the control device 5 continues normal operation because the propelling is not stopped due to the abnormality in the first place.

### <4. Fail safe operation and ship steering continuous operation>

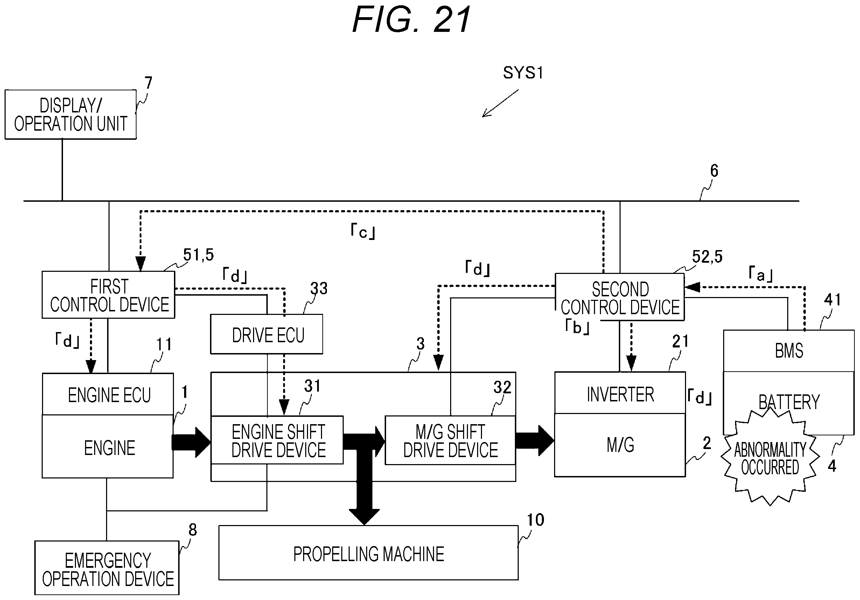

Next, fail safe operation and ship steering continuous operation for the ship 300 will be described with reference to Figs. 21 to 29. In Figs. 21 to 29, a thin solid line indicates a signal line, a thick black arrow indicates a power flow, and a white arrow indicates a power flow. In Figs. 21 to 29, a broken arrow indicates that the control processing is executed, and an alphabet in the vicinity of the broken arrow or a block indicating the device indicates the order of execution of operation. The above-described operation is performed in alphabetical order.

Note that the ship steering continuous operation described below is implemented because the control device 5 that controls the hybrid system SYS1 is configured separately into the first control device 51 that controls the engine side and the second control device 52 that controls the motor generator side.

Fig. 21 is a diagram showing the fail safe operation when an abnormality has occurred in some of the components of the motor generator control system 200 (see Fig. 1) during navigation in the HYB mode. In Fig. 21, as an example, the abnormality has occurred in the battery 4. Due to the occurrence of the abnormality in the battery 4, the BMS 41 notifies the second control device (hybrid ECU) 52 of the abnormality in the battery 4 (operation order "a"). In this manner, the second control device 52 detects the occurrence of the abnormality (operation order "b").

The second control device 52 notifies the first control device (helm ECU) 51 of the occurrence of the abnormality on the motor generator control system 200 side (operation order "c"). After the notification, the first control device 51 decelerates the engine rotation, controls the shift valve, and finally stops the drive of the engine 1 (operation order "d"). Meanwhile, the second control device 52 decelerates the rotation of the motor generator 2, controls the shift valve, and finally stops the drive and charging of the motor generator 2 (operation order "d").

Note that in the example shown in Fig. 21, the device in which the abnormality has occurred in the motor generator control system 200 is the battery 4. However, even when the abnormality has occurred in another device such as the motor generator 2 or the inverter 21, the drive of the engine 1 and the motor generator 2 is similarly stopped.

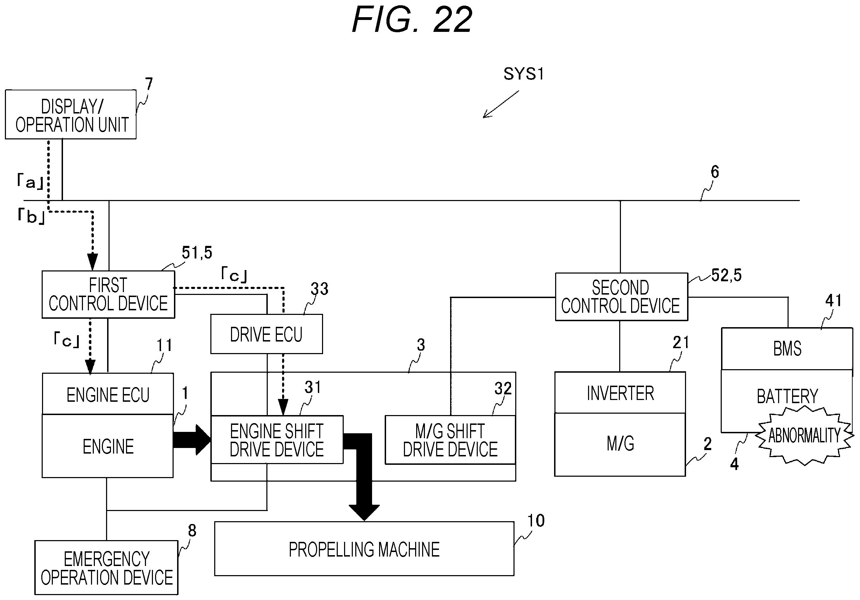

Fig. 22 is a diagram showing the ship steering continuous operation after the fail safe operation shown in Fig. 21. Along with the stop of the propelling due to the abnormality, the occupant of the ship 300 performs an operation (transition operation) of switching the control to the ship steering control without the hybrid function using the display/operation unit 7 (specifically, switch panel 72). Such transition operation information is transmitted from the display/operation unit 7 to the first control device 51 (operation order "a"). Subsequent to the transition operation, the ship steering information is transmitted from the display/operation unit 7 to the first control device 51 (operation order "b"). The first control device 51 obtains the engine control target value according to the acquired ship steering information, and performs the engine control and the engine-side shift valve control according to the target value (operation order "c"). Accordingly, the propelling machine 10 can be driven using the power of the engine 1 to perform the engine navigation.

Note that in the engine control and the shift valve control after the stop of the propelling, the operation of the shift lever included in the control head 73 to the neutral position is a start condition.

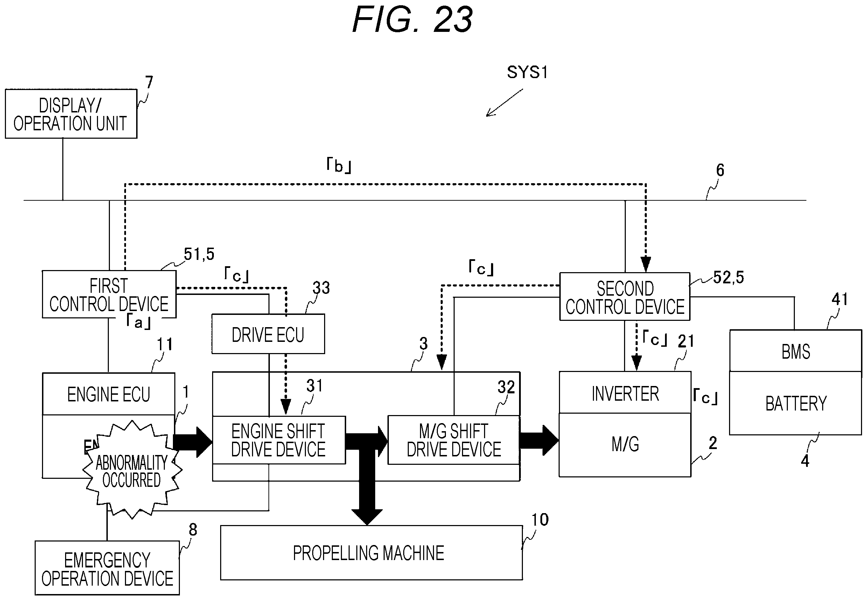

Fig. 23 is a diagram showing the fail safe operation when an abnormality has occurred in some of the components of the engine control system 100 (see Fig. 1) during navigation in the HYB mode. In Fig. 23, as an example, the abnormality has occurred in the engine 1. When the abnormality of the engine 1 occurs, the first control device 51 detects the occurrence of the abnormality (operation order "a"). The first control device 51 notifies the second control device 52 of the occurrence of the abnormality on the engine control system 100 side (operation order "b").

After the notification, the first control device 51 decelerates the engine rotation, controls the shift valve, and finally stops the drive of the engine 1 (operation order "c"). Meanwhile, the second control device 52 decelerates the rotation of the motor generator 2, controls the shift valve, and finally stops the drive and charging of the motor generator 2 (operation order "c").

Note that in the example shown in Fig. 23, the device in which the abnormality has occurred in the engine control system 100 is the engine 1. However, even when the abnormality has occurred in another device such as the engine shift drive device 31, the drive of the engine 1 and the motor generator 2 is similarly stopped.

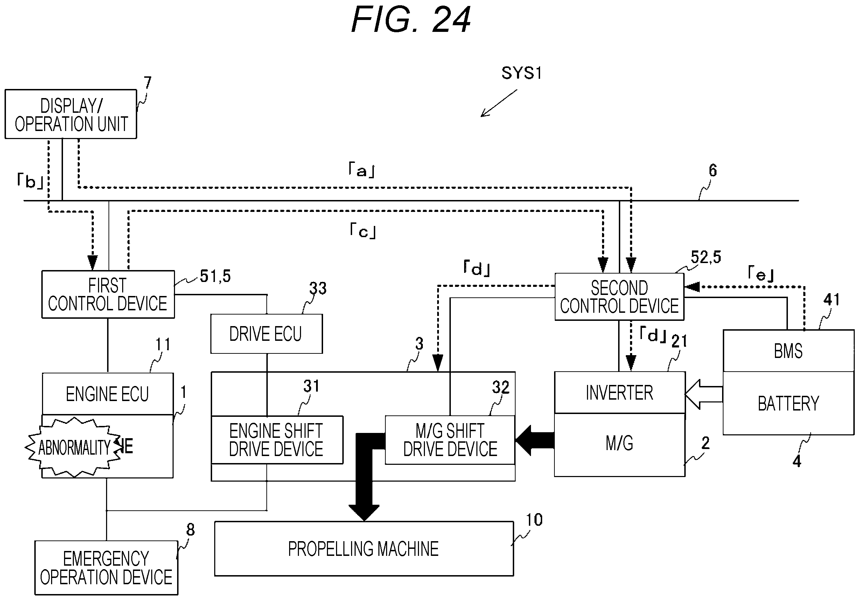

Fig. 24 is a diagram showing the ship steering continuous operation after the fail safe operation shown in Fig. 23. Along with the stop of the propelling due to the abnormality, the occupant of the ship 300 performs an operation (transition operation) of switching the operation mode to the EV mode. Such transition operation information is transmitted from the display/operation unit 7 (specifically, display device 71) to the second control device 52 (operation order "a"). After the transition operation, the ship steering information is transmitted from the display/operation unit 7 to the first control device 51 (operation order "b"), and is further notified from the first control device 51 to the second control device 52 (operation order "c"). The second control device 52 performs the motor control and the motor-side shift valve control based on the acquired ship steering information (operation order "d"). When the motor control is started, battery status monitoring information is periodically transmitted from the BMS 41 to the second control device 52 (operation order "e"). In the above-described manner, the propelling machine 10 can be driven using the motor generator 2 as the motor to perform the motor navigation.

Note that in the motor control and the shift valve control after the stop of the propelling, the operation of the shift lever included in the control head 73 to the neutral position is a start condition.

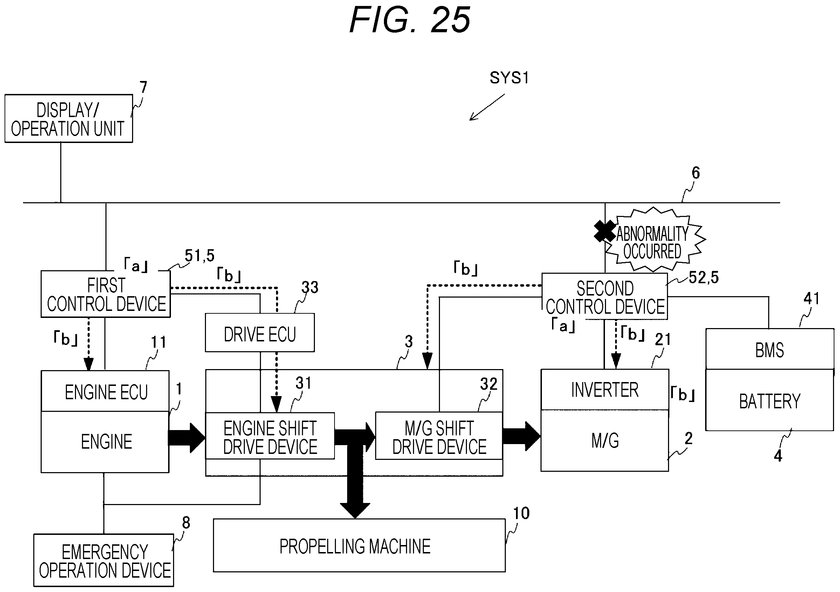

Fig. 25 is a diagram showing the fail safe operation when a communication abnormality has occurred in the second control device 52 during navigation in the HYB mode. When the communication abnormality occurs in the second control device 52, the first control device 51 and the second control device 52 detect such a communication abnormality (operation order "a"). Accordingly, the first control device 51 decelerates the engine rotation, controls the shift valve, and finally stops the drive of the engine 1 (operation order "b"). Meanwhile, the second control device 52 decelerates the rotation of the motor generator 2, controls the shift valve, and finally stops the drive and charging of the motor generator 2 (operation order "b").

Note that the ship steering continuous operation after the fail safe operation shown in Fig. 25 has been performed is similar to the steering continuous operation shown in Fig. 22, and the propelling machine 10 is driven using the power of the engine 1 (i.e., engine navigation).

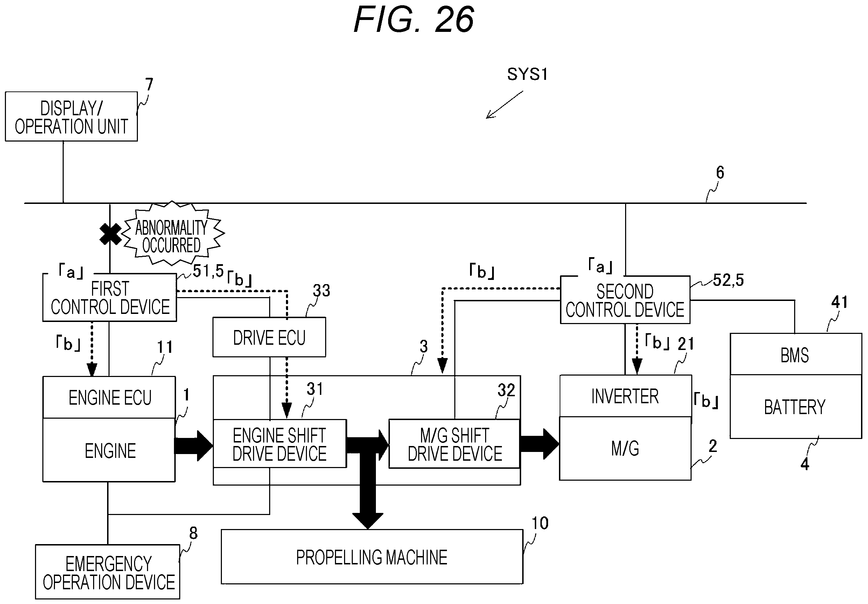

Fig. 26 is a diagram showing the fail safe operation when a communication abnormality has occurred in the first control device 51 during navigation in the HYB mode. When the communication abnormality occurs in the first control device 51, the first control device 51 and the second control device 52 detect such a communication abnormality (operation order "a"). Accordingly, the first control device 51 decelerates the engine rotation, controls the shift valve, and finally stops the drive of the engine 1 (operation order "b"). Meanwhile, the second control device 52 decelerates the rotation of the motor generator 2, controls the shift valve, and finally stops the drive and charging of the motor generator 2 (operation order "b").

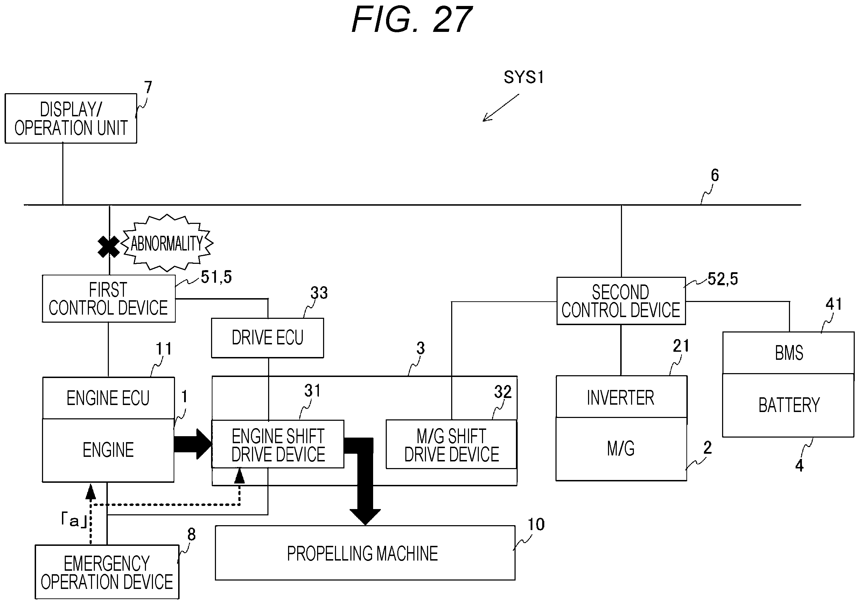

Fig. 27 is a diagram showing the ship steering continuous operation after the fail safe operation shown in Fig. 26. Since communication cannot be made between the first control device 51 and the second control device 52, the ship steering information using the control head 73 cannot be transmitted to the first control device 51 and the second control device 52. For this reason, the occupant of the ship 300 switches the ship steering to one using the emergency operation device 8. Accordingly, the emergency operation by the emergency operation device 8 is started (operation order "a"). That is, the propelling machine 10 can be driven using the power of the engine 1 to perform the engine navigation.

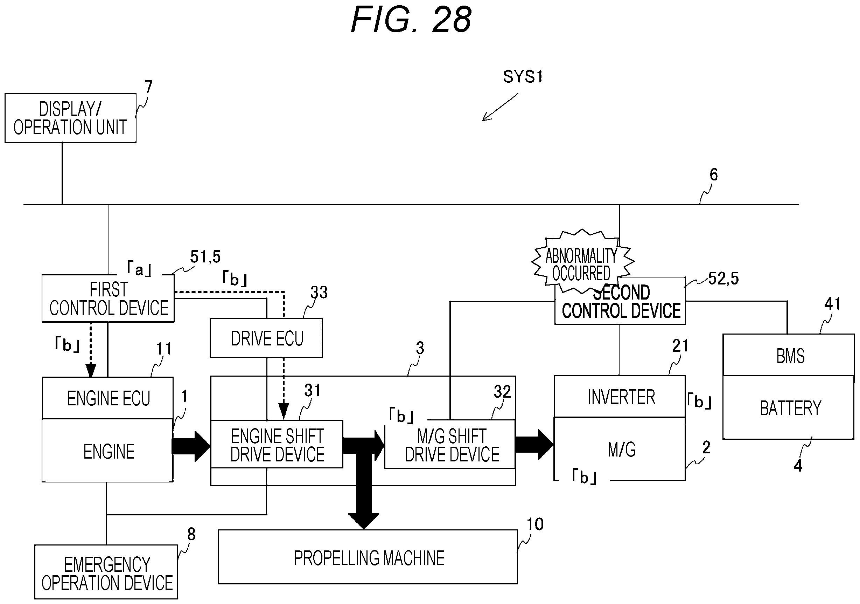

Fig. 28 is a diagram showing the fail safe operation when an abnormality has occurred in the second control device 52 during navigation in the HYB mode. When the abnormality occurs in the second control device 52, the first control device 51 detects such an abnormality (operation order "a"). Accordingly, the first control device 51 decelerates the engine rotation, controls the shift valve, and finally stops the drive of the engine 1 (operation order "b"). Further, in order to cause the inverter 21 and the motor generator shift drive device 32 to lose the control instruction from the second control device 52, the drive of the motor generator 2 is stopped and charging is also stopped (operation order "b").

Note that the ship steering continuous operation after the fail safe operation shown in Fig. 28 has been performed is similar to the steering continuous operation shown in Fig. 22, and the propelling machine 10 is driven using the power of the engine 1 (i.e., engine navigation).

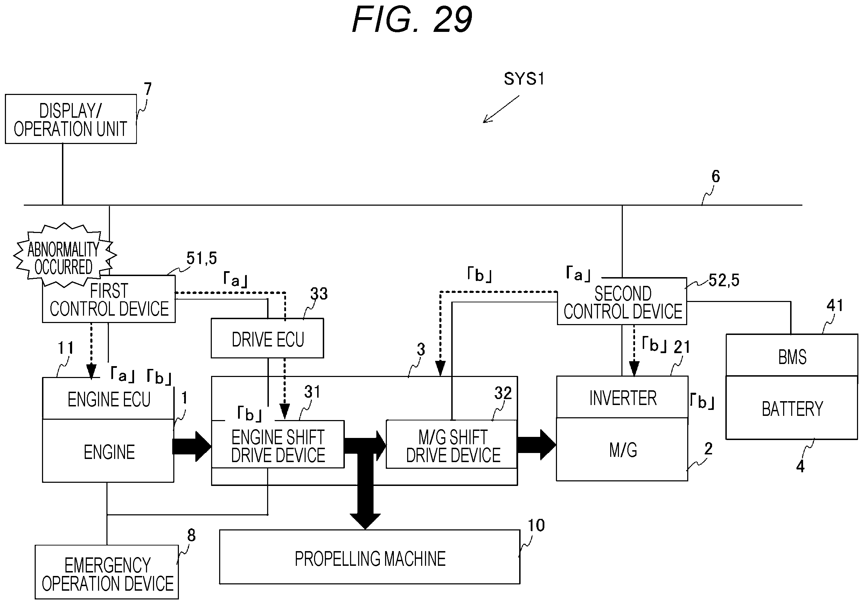

Fig. 29 is a diagram showing the fail safe operation when an abnormality has occurred in the first control device 51 during navigation in the HYB mode. When the abnormality occurs in the first control device 51, the engine ECU 11, the drive ECU 33, and the second control device 52 detect such an abnormality (operation order "a"). Accordingly, the engine 1 is stopped after having been decelerated, and a clutch is disengaged according to stop of output from the engine 1 (operation order "b"). Meanwhile, the second control device 52 decelerates the rotation of the motor generator 2, controls the shift valve, and finally stops the drive and charging of the motor generator 2 (operation order "b").

Note that the ship steering continuous operation after the fail safe operation shown in Fig. 29 has been performed is similar to the steering continuous operation shown in Fig. 27, and the engine navigation using the emergency operation device 8 is performed.

In the fail safe operation described above, the rotation of the propelling machine 10 is stopped when the abnormality occurs, but the present invention is not limited thereto. For example, when the degree of breakdown is low, the rotation of the propelling machine 10 may be decelerated instead of being stopped.

### <5. Points to be noted>

Various changes can be made to various technical features disclosed in the present specification without departing from the spirit of the technical creation. In addition, a plurality of embodiments and modifications described in the present specification may be implemented in combination to the extent possible.

### <6. Additional Note>

An exemplary ship of the present invention may include a plurality of hybrid systems that drives a propelling machine, and a control device that controls the plurality of hybrid systems, and the control device may set the plurality of hybrid systems to the same operation mode (first configuration).

In the ship according to the first configuration, when there is an unusable operation mode in even one of the plurality of hybrid systems, the control device may prohibit shift to the unusable operation mode for all the hybrid systems (second configuration).

In the ship according to the first or second configuration, the control device may detect a charging rate of a battery for each hybrid system, and may stop charging of a hybrid system having a charging rate of a predetermined value or more (third configuration).

In the ship according to any one of the first to third configurations, the control device may cause a display device to display a minimum charging rate among charging rates of the batteries in the plurality of hybrid systems (fourth configuration).

In the ship according to any one of the first to fourth configurations, when there is a battery which needs to be charged in even one of the plurality of hybrid systems, the control device may perform notification processing of notifying insufficient charging (fifth configuration).

In the ship according to any one of the first to fifth configurations, when it is estimated that thrust is unbalanced among the plurality of hybrid systems, the control device may perform notification processing of notifying the unbalance, and may cause the plurality of hybrid systems to decelerate or stop (sixth configuration).

In the ship according to any one of the first to sixth configurations, the control device may not permit ship steering using a shift operation unit unless the shift operation unit is returned to a neutral position after stop (seventh configuration).

In the ship according to any one of the first to seventh configurations, the control device may include a first control device capable of controlling navigation using an engine, and a second control device provided communicably with the first control device and being capable of controlling navigation using the hybrid systems (eighth configuration).

An exemplary display device of the present invention may have a configuration (ninth configuration) applied to the ship according to any one of the first to eighth configurations.

An exemplary display device of the present invention may be a display device for displaying an operation status of a hybrid system that drives a propelling machine that propels a ship, which has a configuration in which a switching menu for an operation mode set in the hybrid system is displayed by operation of an operation unit displayed on a screen for displaying the operation status (tenth configuration).

In the display device according to the tenth configuration, the operation unit may be a mode status display button that displays the status of the operation mode and functions as a button (eleventh configuration).

In the display device according to the tenth or eleventh configuration, the switching menu may be displayed so as to cover part of an image displayed on the screen upon operation of the operation unit (twelfth configuration).

In the display device according to the twelfth configuration, the switching menu may be displayed so as to cover a symbol representing a component forming the hybrid system (thirteenth configuration).

In the display device according to the thirteenth configuration, the switching menu may include a plurality of mode selection buttons, and a symbol corresponding to a selection target among the symbols may be displayed on each of the plurality of mode selection buttons (fourteenth configuration).

In the display device according to any one of the tenth to fourteenth configurations, when the operation mode includes a switchable mode and an unswitchable mode, the switching menu may be displayed such that these modes are distinguished from each other (fifteenth configuration).

In the display device according to any one of the tenth to fifteenth configurations, when the operation mode is transitioning along with operation of the menu, the switching menu may be changed to a display form for notifying that the operation mode is transitioning (sixteenth configuration).

In the display device according to the sixteenth configuration, the switching menu may be hidden after a lapse of a certain period of time from completion of the transition of the operation mode (seventeenth configuration).

In the display device according to any one of the tenth to seventeenth configurations, when operation of another display device different from the display device is enabled, the switching menu may be hidden even when the operation unit is operated (eighteenth configuration).

In the display device according to any one of the tenth to eighteenth configurations, an external charging mode symbol representing an external charging mode for performing charging using a power source outside the ship may be displayed on the screen (nineteenth configuration).

In the display device according to any one of the tenth to nineteenth configurations, a symbol representing the component forming the hybrid system may be displayed on the screen, and when there is a component for which a warning is to be made or an abnormality is to be notified, a symbol representing such a component may be highlighted (twentieth configuration).

### LIST OF REFERENCE SIGNS

- 1: Engine
- 4: Battery
- 5: Control device
- 10: Propelling machine
- 51: First control device
- 52: Second control device
- 53: Second case attachment portion
- 54: Coupling portion
- 71: Display device
- 300: Ship
- 710: Main screen
- 711: Symbol
- 714: Mode status display button (operation unit)
- 716: Switching menu
- 718: External charging mode symbol
- 7161: Mode selection button
- SYS1: Hybrid system

## Claims

1. A ship comprising:
a plurality of hybrid systems that drives a propelling machine; and
a control device that controls the plurality of hybrid systems,
wherein the control device sets the plurality of hybrid systems to an identical operation mode.

2. The ship according to claim 1, wherein when there is an unusable operation mode in even one of the plurality of hybrid systems, the control device prohibits shift to the unusable operation mode for all the hybrid systems.

3. The ship according to claim 1, wherein the control device detects a charging rate of a battery for each hybrid system, and stops charging of a hybrid system having a charging rate of a predetermined value or more.

4. The ship according to claim 1, wherein the control device causes a display device to display a minimum charging rate among charging rates of batteries in the plurality of hybrid systems.

5. The ship according to claim 1, wherein when there is a battery which needs to be charged in even one of the plurality of hybrid systems, the control device performs notification processing of notifying insufficient charging.

6. The ship according to claim 1, wherein when it is estimated that thrust is unbalanced among the plurality of hybrid systems, the control device performs notification processing of notifying the unbalance, and causes the plurality of hybrid systems to decelerate or stop.

7. The ship according to claim 1, wherein the control device does not permit ship steering using a shift operation unit unless the shift operation unit is returned to a neutral position after stop.

8. The ship according to claim 1, wherein
the control device includes
a first control device capable of controlling navigation using an engine, and
a second control device provided communicably with the first control device and being capable of controlling navigation using the hybrid systems.
